# EUROPÄISCHE PATENTSCHRIFT

(11) **EP 3 667 241 B1**
(45) Veröffentlichungstag und Bekanntmachung des Hinweises auf die Patenterteilung: **25.09.2024**
(21) Anmeldenummer: 19213379.1
(22) Anmeldetag: 04.12.2019
(51) Int. Cl.: G01D 4/00, G01D 9/00, G01D 21/00, H04Q 9/04, H04Q 9/00, H04W 56/00, H04W 4/38

(54) **VERFAHREN ZUM SAMMELN VON DATEN SOWIE SENSOR, DATENSAMMLER UND MESSDATEN-INFORMATIONSNETZWERK**
METHOD FOR COLLECTING DATA AND SENSOR, DATA COLLECTOR AND MEASURING DATA INFORMATION NETWORK
PROCÉDÉ DE COLLECTE DE DONNÉES AINSI QUE CAPTEUR, COLLECTEUR DE DONNÉES ET RÉSEAU D'INFORMATIONS DE DONNÉES DE MESURE

(30) Priorität: 14.12.2018 DE 102018009806
(43) Veröffentlichungstag der Anmeldung: 17.06.2020
(73) Patentinhaber: Diehl Metering Systems GmbH, 90451 Nürnberg (DE); DIEHL METERING SAS, 68304 Saint Louis (FR)
(72) Erfinder: Sosna, Christoph, 90429 Nürnberg (DE); Bach, Guy, 68640 Waldighofen (FR); Breton, Aster, 05350 Saint Véran (FR); Joppich-Dohlus, Petra, 91080 Rathsberg (DE); Schmidt, Achim, 91367 Weißenohe (DE); Kauppert, Thomas, 90455 Nürnberg (DE); Schmitz, Stefan, 90455 Nürnberg (DE); Gottschalk, Klaus, 90610 Winkelhaid (DE)
(74) Vertreter: Diehl Patentabteilung

(56) Entgegenhaltungen:
- WO-A1-2018/233865
- US-A1- 2013 285 834

## Beschreibung

Die vorliegende Erfindung betrifft zum einen ein Verfahren zum Sammeln von Daten gemäß Anspruch 1 sowie ein Messdaten-Informationsnetzwerk gemäß Anspruch 20.

### Technologischer Hintergrund

Verbrauchszähler sind Bestandteil von Versorgungsnetzen zur Verteilung von Verbrauchsgütern, wie z.B. Gas, Wasser, Wärme oder Elektrizität, und dienen dazu, Verbrauchsdaten zu generieren. Verbrauchsdaten werden auf der Basis von von einem Messelement eines Sensors gelieferten Rohmessdaten von einem zählerseitigen Mikroprozessor errechnet und über ein Kommunikationssystem in Form eines BUS-Systems, insbesondere eines sogenannten M-BUS-Systems an eine zentrale Datenverwaltung (Head-End-System) weitergeleitet. Bei den Daten handelt es sich vor allem um den aktuellen Verbrauch, d.h. den Zählerstand.

Hierbei werden Rohmessdaten von dem Messelement eines Sensors des Verbrauchszählers zu vorbestimmten vorgegebenen Zeitpunkten generiert, von einem Mikroprozessor des Verbrauchszählers ausgewertet d. h. in Verbrauchsdaten umgerechnet und die daraus resultierenden Verbrauchsdaten anschließend über eine primäre Kommunikationsstrecke von einer Lese- bzw. Empfangseinrichtung (M-BUS-Master bzw. Konzentrator oder Datensammler) zu festgelegten Zeitpunkten an den einzelnen lokal angeordneten Verbrauchszählern abgefragt. Anschließend werden die Verbrauchsdaten von der Lese- bzw. Empfangseinrichtung über eine tertiäre Kommunikationsstrecke, beispielsweise auf Basis von LAN, GPRS, 3G, LTE, weiter zu einem Head-End-System übertragen. Die Verbrauchsdaten können dann im Head-End angezeigt oder zur Rechnungsstellung verwendet werden. Die bisherige Konzeption der Verbrauchsdatenerfassung ist sowohl in ihrer Informationstiefe als auch in ihrem Informationsumfang begrenzt.

### Druckschriftlicher Stand der Technik

Die US 2013/285834 A1 beschreibt ein Verfahren zum Erhalt von genauen, momentanen elektrischen Verbrauchsdaten für Telemetrie Zwecke. Die Daten sollen innerhalb einiger weniger Sekunden mit hoher Auflösung übertragen werden. Pulse werden zusammen mit einem Zeitstempel übertragen, wobei der jeweiligen Puls-bezogene Zeitstempel an dem nachziehenden Ende des jeweiligen Pulses erzeugt wird. Die Übertragung der mit Zeitstempel versehenen Pulse soll permanent in einem fest vorgegebenen Zeitraster von wenigen Sekunden erfolgen.

In der WO 2018/233865 wird ein Verfahren zum Sammeln von Daten, die von jeweils ein Messelement enthaltenden Sensoren geliefert werden. Das Verfahren umfasst: Aufnehmen aufeinanderfolgender Rohmessdaten, die zeitgestempelten, von dem Messelement des jeweiligen Sensors gelieferten elementaren Messeinheiten mindestens einer/s physikalischen oder physikalisch-chemischen Größe oder Parameters entsprechen, Abspeichern dieser Rohmessdaten in den Speichermitteln des Sensors, Übertragen der unverarbeiteten Rohmessdaten in komprimierter Form über eine Funkstrecke und Sammeln, Speichern und Auswerten der von einer Vielzahl von Sensoren übertragenen Rohmessdaten in einer entfernten zentralen Verarbeitungsanlage.

### Aufgabe der vorliegenden Erfindung

Die Aufgabe der vorliegenden Erfindung besteht darin, ein gattungsgemäßes Verfahren zum Sammeln und/oder Weiterleiten von Messdaten mit gesteigertem Informationsinhalt zur Verfügung zu stellen.

### Lösung der Aufgabe

Die vorstehende Aufgabe wird durch die Merkmale des Anspruchs 1 gelöst, durch einen Sensor gemäß Anspruch 20, sowie durch ein Messdaten-Informationsnetzwerk gemäß Anspruch 22. Zweckmäßige Ausgestaltungen werden in den Unteransprüchen beansprucht.

Erfindungsgemäß ist ein Verfahren zum Sammeln von Daten vorgesehen, vorzugsweise Daten in Zusammenhang mit einem Verbrauch, einem physikalischen oder physikalisch-chemischen Parameter und/oder einem Betriebszustand im Rahmen eines Betriebs eines lokalen Sensors , vorzugsweise eines Sensors für einen Verbrauchszähler, als Bestandteil eines mindestens einen lokalen Sensor vorzugsweise eine Mehrzahl von lokalen Sensoren umfassendes Versorgungsnetzes zur Verteilung eines Verbrauchsguts. Der Sensor enthält mindestens ein Messelement, welches elementare Messeinheiten, die mindestens einer physikalischen oder physikalisch-chemischen Größe oder mindestens eines physikalischen oder physikalisch-chemischen Parameters entsprechen, als Rohmessdaten liefert, und der Sensor umfasst oder ist mit Kommunikationsmittel sowie Speichermittel verbunden. Erfindungsgemäß werden zur Festlegung der Messauflösung des Sensors die Bedingungen für ein Generieren von Zeitstempelungen unter Anwendung eines Korrelierungsmodells vorher festgelegt, auf der Basis des Korrelierungsmodells Zeitstempelungen von aufeinanderfolgenden Rohmessdaten in dem Sensor generiert, die Zeitstempelungen über eine drahtgebundene Verbindung und/oder über eine Funkstrecke übertragen, so dass auf Basis der Zeitstempelungen unter Anwendung des Korrelierungsmodells die vom Messelement erfassten Rohmessdaten rekonstruiert und ausgewertet werden. Erfindungsgemäß wird ferner eine Zustandsüberwachung des Sensors durchgeführt wird, indem aktuelle Zeitstempelungen mit historischen bzw. empirischen Zeitstempelungen, vorzugsweise fortlaufend also permanent, verglichen werden. Hierdurch ist es möglich, das Betriebsverhalten eines Sensors und/oder das Nutzerverhalten am Ort des Sensors ganz besonders genau zu überwachen. Man kann auf diese Weise einen "Betriebs-Fußabdruck" generieren. Daraus resultiert im Vergleich zu bisher eine erheblich höhere Informationsdichte und Informationstiefe bezüglich des Zustands eines Geräts oder Gegenstands.

Erfindungsgemäß werden zur Festlegung der Messauflösung des Sensors die Bedingungen für ein Generieren von Zeitstempelungen unter Anwendung eines Korrelierungsmodells vorher festgelegt. Auf der Basis des Korrelierungsmodells werden Zeitstempelungen von aufeinanderfolgenden Rohmessdaten in dem Sensor generiert und in den Speichermitteln abgelegt. Anschließend werden lediglich die den erfassten Rohmessdaten zugeordneten Zeitstempelungen über die primäre Kommunikationsstrecke übertragen, so dass auf Basis der bei dem Master ankommenden Zeitstempelungen unter Anwendung des Korrelierungsmodells die vom Messelement erfassten Rohmessdaten nach erfolgter Übertragung wieder rekonstruiert und ausgewertet werden können. Hierdurch entfallen rechenaufwendige und deshalb energieintensive Rechenoperationen im Bereich des lokalen Sensors. Rechenaufwendige und energieintensive Rechenoperationen können somit in den Bereich des Masters oder eines Head-Ends verlagert werden. Das erfindungsgemäße Verfahren ermöglicht es, Zeitstempelungen in einem fortlaufenden, vollständigen und konsistenten Zeitzusammenhang, also lückenlos, insbesondere im Bereich einer entfernten zentralen Verarbeitungsanlage bzw. einem Head-End-System bereitzustellen. Da es sich um Zeitstempelungen handelt, können sie dem Zeitverlauf kontinuierlich zugeordnet werden, d.h. bilden einen Realzeit-Verlauf ab, der diskontinuierliche Lücken oder Datenfehlzeiten ausschließt. Der gemäß dem erfindungsgemäßen Verfahren rekonstruierte kontinuierliche Rohmessdatenstrom besitzt im Vergleich zur bisherigen Konzeption eine sehr viel höhere Auflösung über der kontinuierlichen Zeitachse.

Dadurch, dass die aktuellen Zeitstempelungen sowie die historischen Zeitstempelungen jeweils als Chronogramme verglichen werden, wobei die Chronogramme zeitlich aufeinanderfolgende Zeitstempelungen enthalten, kann die Überwachung auf besonders einfache Art und Weise erfolgen.

Insbesondere kann im Rahmen des Vergleichs festgestellt werden, ob einzelne Zeitstempelungen und/oder Gruppen von Zeitstempelungen entlang der Zeitachse t fehlen und/oder entlang der Zeitachse t verschoben sind. Hierbei kann es sich um Anhaltspunkte für Gerätefehler, Fluidveränderungen oder fehlerhaftes Konsumentenverhalten handeln.

Besonders vorteilhaft ist es, dass der Vergleich auf Basis der Messauflösung des Sensors bzw. Messelements oder eines ganzzahligen Vielfachen derselben stattfindet. Gerätefehler, Fluidveränderungen oder fehlerhaftes Konsumentenverhalten können daher nicht mehr unerkannt bleiben.

Zweckmäßigerweise wird der Vergleich im Rahmen eines Mustervergleichs bzw. im Rahmen der sog. Pattern Recognition Technology vorgenommen. Hierbei können Chronogramm-Muster für einen ganz bestimmten Vorgang "hinterlegt" werden. Beispielsweise kann ein (empirisches) Chronogramm-Muster für einen ordnungsgemäßen Wassereinlauf einer Geschirrspülmaschine hinterlegt werden. Bei sich veränderndem Zulauf beispielsweise durch ein allmählich sich verschließendes Einlaufsieb kann dieser Zustand durch das erfindungsgemäße Verfahren erfasst und daraus resultierende Maßnahmen getroffen werden. Auf diese Weise können unterschiedlichste (empirische) Chronogramm-Muster für unterschiedlichste Vorgänge hinterlegt werden. Es können somit schleichende Veränderungen bzw. Verschlechterungen im Versorgungsnetz erkannt werden und entsprechend frühzeitig Gegenmaßnahmen ergriffen werden.

Als Folge des Vergleichs der Zeitstempelungen der aktuellen Messung mit historischen oder empirischen Zeitstempelungen kann eine Betriebszustandsmitteilung oder ein Warnhinweis angegeben werden.

Vorzugsweise handelt es sich bei dem Sensor um einen Durchflusssensor, beispielsweise eines Wasserzählers, Wärmezählers, einer Waschmaschine, Geschirrspülmaschine oder dergleichen.

Erfindungsgemäß stehen der oder die lokalen Sensoren über eine primäre Kommunikationsstrecke mit einem Datensammler in Verbindung, ist zwischen dem Datensammler und einem Head-End eine tertiäre Kommunikationsstrecke vorgesehen und werden die von den Sensoren und/oder Verbrauchszählern übertragenen Zeitstempelungen im Datensammler und/oder im Head-End gesammelt, gespeichert und/oder ausgewertet. Die Übertragung der Zeitstempelungen über die primäre und tertiäre Kommunikationsstrecke ermöglicht es, eine erheblich grö-βere Anzahl von Berechnungen und/oder Feststellungen und/oder Funktionen einschließlich "Business"-Funktionen im Head-End, wo genügend Rechenleistung zur Verfügung steht, vornehmen zu können als bisher.

Bei dem Korrelierungsmodell kann ein bestimmter Wert oder eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung festgelegt werden, wobei bei einem Erfassen des bestimmten Werts oder der bestimmten Wertdifferenz oder der bestimmten Wertänderung durch das Messelement die Zeitstempelung ausgelöst, als solche in den Speichermitteln des Sensors abgespeichert und für die Übertragung bereitgestellt wird. Ändert sich der vom Sensor erfasste Wert nicht, wird keine Zeitstempelung erzeugt. Somit können typisch für das erfindungsgemäße Verfahren längere Zeiträume ohne Zeitstempelung verstreichen. Es müssen somit nicht ständig Daten übertragen werden. Dennoch besitzt das Verfahren eine sehr hohe Auflösung.

Insbesondere können im Rahmen des Korrelierungsmodells ein schrittweise oder inkrementell sich erhöhender Zählerstand und/oder eine Wertetabelle mittels Zeitstempelungen abgebildet werden.

Vorzugsweise sind die Zeitstempelungen mit einem Vorzeichen, z.B. Plus- oder Minusvorzeichen, versehen. Dies ist vor allem bei der Abbildung einer Wertetabelle von Vorteil, da hierdurch festgelegt wird, ob die konkrete Zeitstempelung einen aufsteigenden oder absteigenden Wert der Wertetabelle betrifft.

Gemäß der Erfindung werden eine Mehrzahl von Zeitstempelungen entlang der primären Kommunikationsstrecke jeweils als Datenpaket übertragen.

Vorteilhafterweise kann auf Basis der beim Datensammler und/oder beim Head-End ankommenden Zeitstempelungen unter Anwendung des Korrelierungsmodells ein Rohmessdatenstrom generiert werden. Bei den betreffenden aufeinanderfolgenden Zeitstempelungen handelt es sich insbesondere um keine Berechnungen und/oder Auswertungen.

Vorzugsweise ist der rekonstruierte Rohmessdatenstrom in der Weiterfolge der Datenverarbeitung abgesehen von seiner zeitlichen Auflösung (Abtastrate oder Vielfaches der Abtastrate) jederzeit auf einer zeithistorischen Basis zeitlückenlos auswertbar. Daraus resultiert der Vorteil, dass z.B. auch in der Vergangenheit liegende ereignisbedingte Zustandsveränderungen im Versorgungsnetzwerk (wie z.B. Overflow, Underflow, Leckagen, Manipulationsversuche usw.) in genauer Zeitzuordnung und ohne Lücken feststellbar bzw. dokumentierbar sind. Durch eine hochgranulare zeitdiskrete Abtastung ist eine hohe Genauigkeit in der zeitlichen Auflösung gegeben. Ferner besteht die Möglichkeit, vergangene Verbrauchsdaten dem Verbraucher wesentlich genauer anzuzeigen und/oder bei Auswertungen hinsichtlich des Verbrauchsverhaltens bzw. Änderungen desselben besser miteinzubeziehen. Dies wiederum wirkt sich verbrauchsoptimierend aus und stellt für den Verbraucher eine besonders wichtige Information des Netzversorgers dar.

Bei den betreffenden aufeinanderfolgenden Zeitstempelungen handelt es sich insbesondere um keine Berechnungen und/oder Auswertungen, sondern um elementare Messeinheiten.

Beispielsweise kann es sich bei elementaren Messeinheiten um die elektrische Spannung oder um die Stromstärke handeln, die gemessen werden. Beispielsweise kann die Ausgangsspannung eines Hallsensors im Falle seiner Anregung oder die Spannung eines Temperaturfühlers erfasst werden. Zweckmäßigerweise kann sich die gemessene physikalische Größe auf ein Versorgungsmedium, vorzugsweise Wasser, Strom, Treibstoff oder Gas, eines Versorgungsnetzes beziehen.

Es besteht die Möglichkeit, dass der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor strömt oder von diesem kontaktiert wird.

Die elementare Messeinheit kann zweckmäßigerweise eine Zeitstempelung generieren, sobald die elementare Messeinheit einen Impuls empfängt.

Es besteht die Möglichkeit, dass der Rohmessdatenstrom eine zeitliche Auflösung besitzt, die durch die Sensor-Abtastrate bzw. Messelement-Abtastrate oder ein Vielfaches derselben festgelegt oder bedingt ist. Zweckmäßigerweise besitzt der Rohmessdatenstrom eine zeitliche Auflösung, die nur durch die Sensor-Abtastrate bzw. Messelement-Abtastrate oder ein Vielfaches derselben festgelegt oder zumindest bedingt ist. Die zeitliche Auflösung des Rohmessdatenstroms liegt vorzugsweise im Sekundenbereich, Zehntelsekundenbereich, Hundertstelsekundenbereich oder Tausendstelsekundenbereich.

Vorteilhafterweise ist der Rohmessdatenstrom unter Zugrundelegung der festgelegten Auflösung kontinuierlich und/oder vollständig. Daraus resultiert eine ganz besonders hohe Messwertauflösung entlang des kontinuierlichen Zeitverlaufs und daraus wiederum eine besondere Informationstiefe als Basis für darauf aufbauende Auswertungen bzw. Berechnungen.

Um den kontinuierlichen Rohmessdatenstrom zu erzeugen, werden die Daten-Pakete zweckmäßigerweise in einer entsprechenden Zeitabfolge-Referenz zusammengefügt oder zumindest zueinander in Relation gesetzt, sodass die in den Paketen enthaltenen Zeitstempelungen entlang der Realzeitachse entsprechend ihrer Abtastung und vorherigen Paketaufteilung später wieder zusammengefügt oder zumindest in eine fortlaufende zeitliche Relation zueinander gesetzt sind.

Die Festlegung der Frage, wann eine neue Datenübertragung in Form einer Nachricht oder eines Telegramms (eines oder mehrerer Datenpakete) durchzuführen ist, hängt erfindungsgemäß davon ab, ob mindestens die Bedingung b) der beiden Bedingungen
(a) Ablauf eines vorgegebenen Zeitintervalls und
(b) Erreichen einer vorgegebenen Menge an Zeitstempelungen seit der vorherigen Übertragung
erfüllt ist. Aufgrund dessen kann eine Zeitabfolge-Referenz der zu übertragenden Daten-Pakete in einfacher Weise realisiert werden.

Besonders zweckmäßig ist, dass das Verfahren umfasst, die Zeitstempelungen durch Formatierung in Datenpaketen vorbestimmter fester Größe zu verpacken, wobei jedes Mal, wenn die akkumulierten Daten die Größe eines Datenpakets erreichen oder das vorgegebene Zeitintervall abgelaufen ist, eine neue Übertragung ausgelöst wird.

Es besteht die Möglichkeit, dass die Datenübertragung mit einer Redundanz durchgeführt wird. Zweckmäßigerweise kann die Redundanz in der Übertragung durch wiederholtes Senden desselben Datenpakets in mehreren aufeinanderfolgenden Übertragungsvorgängen oder auf unterschiedlichen Kommunikationswegen oder Funkkanälen erreicht werden. Es besteht ferner die Möglichkeit, dass die Redundanz in der Übertragung durch wiederholtes Senden derselben Zeitstempelungen erreicht wird. Beispielsweise kann die Übertragung eines Datenpakets oder einer Zeitstempelung fünf Mal wiederholt werden.

Vorteilhafterweise können die Zeitstempelungen komprimiert werden und die Komprimierung der Zeitstempelungen verlustfrei durchgeführt werden. Die Komprimierung der Zeitstempelungen kann im Bereich des Sensors bzw. des Verbrauchszählers verlustfrei durchgeführt werden. Die Übertragung der Zeitstempelungen kann zweckmäßigerweise in komprimierter Form und/oder über eine Funkstrecke erfolgen. Die Übertragung kann wiederholt und bedingt jeweils nach Ablauf eines vorgegebenen Zeitintervalls und/oder nach Erreichen einer vorgegebenen Menge an Zeitstempelungen, die seit einer vorherigen Übertragung angesammelt wurden, durchgeführt werden.

Alternativ kann die Komprimierung der Zeitstempelungen aber auch mit einem vorgegebenen, zulässigen Verlustniveau durchgeführt werden. Wird die Datenkomprimierung mit einem vorgegebenen zulässigen Verlustniveau durchgeführt, kann, wenn der Benutzer oder Betreiber eine Energieeinsparung bevorzugt und eine gewisse Ungenauigkeit bei der Wiederherstellung und Wiedergabe der ursprünglichen Messdaten akzeptiert (d.h. einen gewissen Verlust akzeptiert), das Komprimierungsverhältnis dann zum Nachteil einer geringeren Genauigkeit bei der Wiedergabe auf der Empfängerseite erhöht werden. Das Verlustverhältnis oder das Komprimierungsverhältnis kann als programmierbarer oder einstellbarer Parameter vorgesehen sein, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden: eine differenzielle Komprimierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung).

Der Sensor kann hergerichtet sein für den lokalen Einsatz in einem eine Mehrzahl von lokalen Sensoren umfassenden Versorgungsnetz zur Verteilung eines Verbrauchsmediums, wie z.B. Wasser, Gas, Elektrizität, Treibstoff oder Wärme. Ein solcher Sensor kann Bestandteil eines Verbrauchszählers sein. Er ermöglicht es, im Rahmen des Betriebs eines Versorgungsnetzes den Verbrauch sowie weitere Zustandseigenschaften in sehr hoher Auflösung entlang des zeitlichen Verlaufs lückenlos und kontinuierlich zu gewährleisten.

Schließlich betrifft die vorliegende Erfindung zudem ein Messdaten-Informationsnetzwerk mit mindestens einem lokalen Sensor, vorzugsweise einer Mehrzahl von lokalen Sensoren zum Generieren und/oder Weiterleiten von Zeitstempelungen aufgrund von Rohmessdaten auf der Basis des Korrelierungsmodells, vorzugsweise Rohmessdaten in Zusammenhang mit einem Verbrauch an Verbrauchsmedium, einem physikalischen oder physikalisch-chemischen Parameter. Das Messdaten-Informationsnetzwerk umfasst zudem einen Datensammler und ein Head-End, das dazu hergerichtet ist, die Messwerte von den lokalen Sendern auszuwerten. Der mindestens eine lokale Sensor ist hergerichtet zum Sammeln von Daten in Zusammenhang mit dem Verbrauch, dem physikalischen oder physikalisch-chemischen Parameter und/oder dem Betriebszustand im Rahmen eines Betriebes des Sensors, vorzugsweise für einen Verbrauchszähler als Bestandteil eines mindestens den lokalen Sensor vorzugsweise die Mehrzahl von lokalen Sensoren umfassendes Versorgungsnetzes zur Verteilung eines Verbrauchsguts. Der mindestens eine lokale Sensor enthält ein Messelement, wobei das Messelement des jeweiligen lokalen Sensors dazu eingerichtet ist, elementare Messeinheiten, die mindestens einer physikalischen oder physikalisch-chemischen Größe oder mindestens einem physikalischen oder physikalisch-chemischen Parameter entsprechen, als Rohmessdaten zu liefern,
wobei der mindestens eine lokale Sensor dazu eingerichtet ist,
   - zur Festlegung der Messauflösung des lokalen Sensors die Bedingungen für ein Generieren von Zeitstempelungen (TS) unter Anwendung eines Korrelierungsmodells vorher festzulegen,
   - auf der Basis des Korrelierungsmodells Zeitstempelungen (TS) von aufeinanderfolgenden Rohmessdaten in dem Sensor zu generieren,
   - die Zeitstempelungen (TS) über eine drahtgebundene Verbindung und/oder über eine Funkstrecke zu übertragen,
wobei der mindestens eine lokale Sensor über eine primäre Kommunikationsstrecke mit dem Datensammler verbindbar ist,
wobei der Datensammler über eine tertiäre Kommunikationsstrecke mit dem Head-End verbindbar ist,
wobei der Datensammler und/oder das Head-End dazu hergerichtet sind, die von dem Sensor übertragenen Zeitstempelungen zu sammeln, zu speichern und/oder auszuwerten.

Der Sensor ist dazu eingerichtet, eine Mehrzahl von Zeitstempelungen (TS) entlang der primären Kommunikationsstrecke jeweils als Datenpaket (17i, 17i+n) zu übertragen, wobei ein Datenpaket jeweils mehrere Zeitstempelungen (TS1-TSn) enthält und die Festlegung, wann eine neue Datenübertragung in Form eines Datenpakets erfolgen soll oder nicht, davon abhängig zu machen, ob eine vorgegebenen Menge an insbesondere komprimierten gesammelten Zeitstempelungen (TS) seit der vorherigen Datenübertragung erreicht ist, und dass das Head-End dazu eingerichtet ist, den Betriebszustand des Sensors zu überwachen, indem aktuelle Zeitstempelungen (TS) mit historischen und/oder empirischen Zeitstempelungen (TS) verglichen werden.

### Beschreibung der Erfindung anhand von Ausführungsbeispielen

Nachstehend wird die vorliegende Erfindung anhand verschiedener Ausführungsbeispiele näher erläutert. Es zeigen:
- Fig. 1: eine stark vereinfachte schematische Darstellung eines Beispiels von Kommunikationsstrecken eines Versorgungsnetzes zum Sammeln und/oder Weiterleiten von Daten, die von einer Vielzahl von Sensoren als Teil von z.B. Verbrauchszählern aufgenommen werden, an einen Datensammler und ein Head-End;
- Fig. 2: eine stark vereinfachte schematische Darstellungsweise eines Beispiels der Übertragung von Zeitstempelungen charakteristischer Rohmessdaten über die primäre Kommunikationsstrecke von Fig. 1 zum Datensammler;
- Fig. 3: ein Beispiel für eine Nachrichtenstruktur, die von der Messdatenaufbereitung des Verbrauchszählers gemäß Fig. 2 über die primäre Kommunikationsstrecke emittiert bzw. abgefragt wird;
- Fig. 4: ein Beispiel für ein Chronogramm von Zeitstempelungen von den von einem Sensor ausgelesenen Rohmessdaten zwischen zwei Uplink-Übertragungsvorgängen (Nachrichten oder Telegramme, die zu den Zeitpunkten T_{E-1} und T_{E} emittiert werden), in einem Kontext der Fernablesung des Volumenverbrauchs (in diesem Fall enthält das Paket PAⱼ N Zeitstempelungen);
- Fig. 5: eine stark vereinfachte schematische Darstellung des Vergleichs eines Chronogramms aus der laufenden Messung mit einem historischen oder empirischen Vergleichs-Chronogramm;
- Fig. 6: ein Beispiel für das Zusammenfügen der die Zeitstempelungen enthaltenen Datenpakete bzw. Nachrichten bzw. Telegramme zu einem zeitkontinuierlichen Rohmessdatenstrom einschließlich dessen Auswertemöglichkeiten in stark vereinfachter schematischer Darstellungsweise;
- Fig. 7: ein Beispiel eines Sensors eines Verbrauchszählers in Form eines mechanischen Durchflusszählers mit einem Flügelrad, mit dem entsprechende Zeitstempelungen von Rohmessdaten für den Durchfluss erzeugt werden können;
- Fig. 8: ein Beispiel eines Korrelationsmodells zur Generierung von Zeitstempelungen auf Basis der von dem Sensor gemäß Fig. 7 erfassten Rohmessdaten;
- Fig. 9: ein Beispiel eines Temperatursensors in vereinfachter Darstellung; sowie
- Fig. 10: ein weiteres Beispiel eines Korrelationsmodells zur Generierung von Zeitstempelungen auf Basis der von dem Sensor gemäß Fig. 9 erfassten Rohmessdaten.

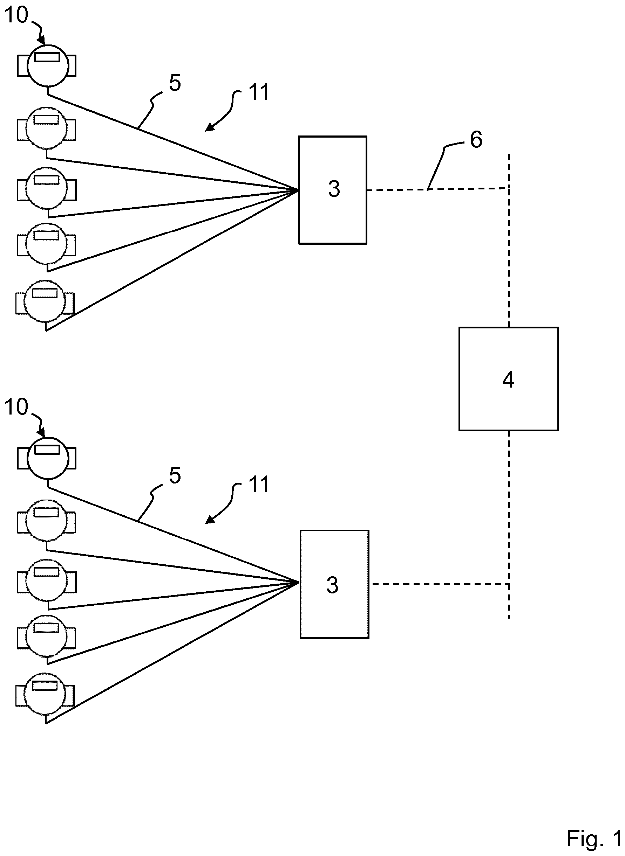

Fig. 1 zeigt ein Messdaten-Informationsnetzwerk, z.B. im Rahmen der Verteilung von Verbrauchsgütern, wie z.B. Gas, Wasser, Elektrizität, Treibstoff oder Wärme. Das Versorgungsnetz umfasst eine Vielzahl von einzelnen lokalen angeordneten Verbrauchszählern 10, die z.B. unterschiedlichen Wohneinheiten eines Mehrfamilienhauses zugeordnet sein können. Die einzelnen Verbrauchszähler 10, z. B. Wasserzähler, Durchflusszähler, Wärmezähler, Elektrizitätszähler oder Gaszähler, sind über eine primäre Kommunikationsstrecke 5 per Funk (Funkstrecke 11) mit einem (ortsfesten oder mobilen) Datensammler 3, der als Master bzw. Konzentrator fungieren kann, verbunden.

Jeder einzelne Verbrauchszähler 10 kann zweckmäßigerweise mit einer zugehörigen ID (Adresse) versehen sein, sodass jeder einzelne Verbrauchszähler 10 vom Datensammler 3 direkt adressiert werden kann und die im jeweiligen Verbrauchszähler 10 vorhandenen Daten abgerufen werden können.

Die Übertragung über die primäre Kommunikationsstrecke 5 wird durch ein BUS-Übertragungsprotokoll vorgegeben, wie z.B. durch das wireless M-BUS-Übertragungsprotokoll.

Der jeweilige Datensammler 3 steht über eine tertiäre Kommunikationsstrecke 6 mit einem sogenannten Head-End 4 in Verbindung. Im Head-End 4 laufen die Daten des gesamten Versorgungsnetzes zusammen. Bei der tertiären Kommunikationsstrecke 6 kann es sich um eine drahtgebundene Kommunikationsstrecke oder um eine auf Funktechnologie basierende Kommunikationsstrecke (z.B. Mobilfunk-Kommunikationsstrecke) handeln. Alternativ können die Daten des jeweiligen Datensammlers 3 bei Bedarf auch von einer portablen Leseeinrichtung ausgelesen und am Head-End 4 wieder eingelesen werden. Die Daten können entlang der tertiären Kommunikationsstrecke 6 auf unterschiedliche Art und Weise übertragen werden, beispielsweise via LAN, GPRS, LTE, 3G usw.

Die einzelnen Verbrauchszähler 10 können mit einer eigenständigen Energieversorgung (Akku) betrieben werden.

Wie in Fig. 1 schematisch dargestellt, werden die vorzugsweise komprimierten und formatierten Zeitstempelungen TS jedes betreffenden Sensors 1 bzw. Verbrauchszählers 10 an den Datensammler 3, der ein lokales Netzwerk einer Vielzahl von ihm zugeordneten Verbrauchszählern 10 bzw. Sensoren 1 verwaltet, übertragen. Von dem Datensammler 3 werden die vorzugsweise komprimierten und formatierten Zeitstempelungen TS jedes der Sensoren 1, die Teil des Versorgungsnetzes sind, an das Head-End 4 übertragen.

Der Datensammler 3 kann die von den jeweiligen Sensoren 1 bzw. Verbrauchszählern 10 abgerufenen Zeitstempelungen TS entweder über ein Zeitintervall (z.B. einen Tag) speichern und dann an einen Verarbeitungsstandort bzw. an das Head-End 4 weiterleiten. Alternativ können die Daten vom Datensammler 3 auch sofort an das Head-End 4 weitergeleitet werden.

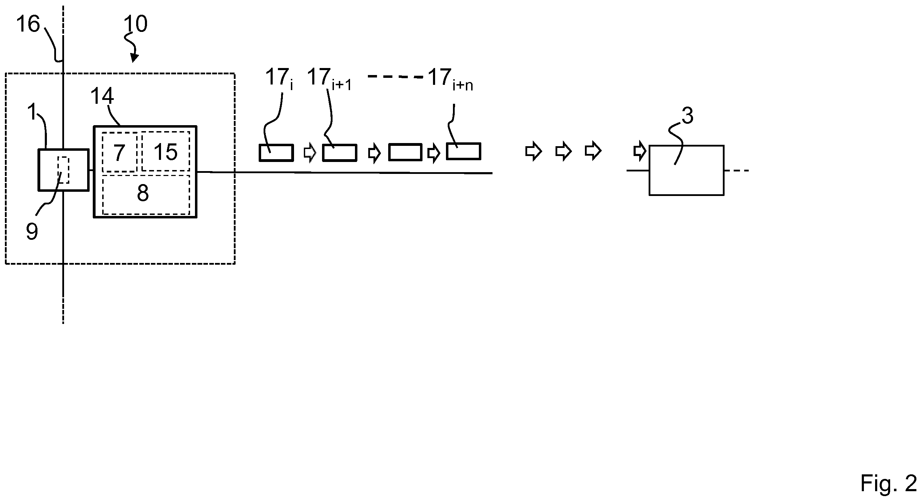

Gemäß Fig. 2 umfasst der jeweilige Verbrauchszähler 10 einen mit mindestens einem Messelement 9 ausgestatteten Sensor 1. Der Sensor 1 ist dazu vorgesehen, über das Messelement 9 Rohmessdaten zu erzeugen, die einer Messdatenaufbereitung 14 zugeführt werden. Die Rohmessdaten entsprechen vom Messelement 9 gelieferten elementaren Messeinheiten der mindestens einen physikalischen oder physikalisch-chemischen Größe oder des mindestens einen physikalischen oder physikalisch-chemischen Parameters. Bei den Rohmessdaten kann es sich beispielsweise um Rohdaten in Zusammenhang mit dem Durchfluss eines Mediums durch eine Versorgungsleitung 16, z.B. Wasserleitung, handeln, insbesondere die Durchflussmenge, die Trübung, das Vorhandensein von Schadstoffen oder das Vorhandensein eines festen und/oder gasförmigen Anteils bzw. fester und/oder gasförmiger Anteile. Es sei darauf hingewiesen, dass es sich bei dem Sensor 1 um alternativ auch um einen Drucksensor, Temperatursensor, Feuchtesensor, Beschleunigungssensor, Höhensensor oder Bewegungssensor handeln kann.

Die Messwertaufbereitung 14 des Verbrauchszählers 10 umfasst Speichermittel 7, eine Zeitreferenzeinrichtung 15 (Quarz) sowie einen Mikroprozessor 8. Die vorgenannten Komponenten können getrennt oder als integrierte Gesamtkomponente vorgesehen sein. Der Verbrauchszähler 10 kann eine (nicht dargestellte) eigene Stromversorgung in Form einer Batterie oder dergleichen bei Bedarf umfassen. Somit kann der Verbrauchszähler 10 energieautark betrieben werden.

Im Vorfeld zu den in Fig. 2 dargestellten Schritten werden im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung TS festgelegt.

Erfindungsgemäß erfolgen im Bereich des jeweiligen Verbrauchszählers 10 folgende Schritte:
- Auslösen einer Zeitstempelung TS bei einem Erfassen des bestimmten Werts, der bestimmten Wertänderung oder der bestimmten Wertdifferenz durch das Messelement 9.
- Abspeichern der Zeitstempelungen TS in den Speichermitteln 7 des Sensors 1 bzw. des Verbrauchszählers 10.
- Übertragen der Zeitstempelungen TS, vorzugsweise in komprimierter Form, über eine Funkstrecke 11, indem in der Messdatenaufbereitung 14 Zeitstempelung-Telegramme 17ᵢ, 17ᵢ₊₁, 17ᵢ₊ₙ vorbereitet werden, die sukzessive an eine zentrale Verarbeitungsanlage, wie z.B. ein Head-End 4, übertragen werden. Die Kompression (Komprimierung) für die Übertragung nimmt der Mikroprozessor 8 vor.

Dementsprechend werden zeitlich nacheinander Datentelegramme 17ᵢ, 17ᵢ₊₁, ...., 17ᵢ₊ₙ übertragen, die fortlaufende Zeitstempelungen TS enthalten. Aus diesen Zeitstempelungen TS kann empfängerseitig unter Anwendung des Korrelierungsmodells ein kontinuierlicher lückenloser Rohmessdatenstrom von sehr hoher Auflösung rekonstruiert werden.

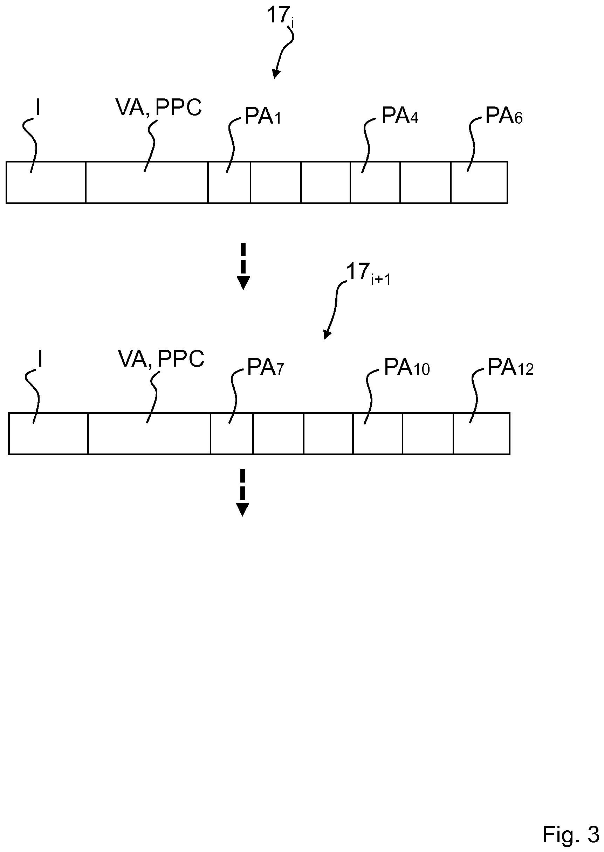

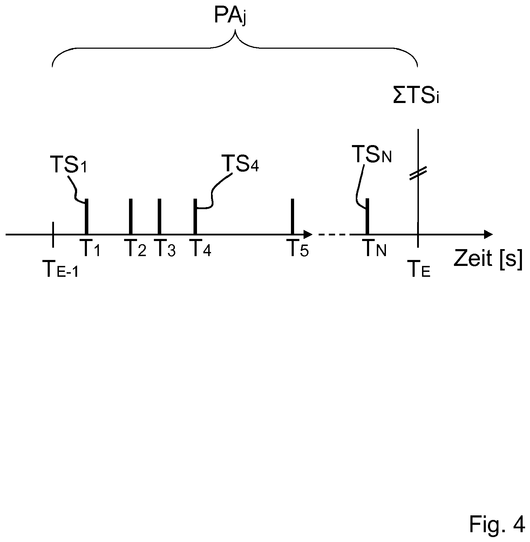

Wie in Figur 3 beispielhaft dargestellt, kann zudem vorgesehen sein, zusammen mit den PAⱼ-Paketen der Zeitstempelungen TS auch die Identität (Adresse) I des betreffenden Sensors 1 und/oder den absoluten oder kumulierten Wert VA der bzw. des vom betreffenden Sensor 1 gemessenen physikalischen oder physikalisch-chemischen Größe oder Parameters in dem jeweiligen Datentelegramm 17ᵢ, 17ᵢ₊₁, ...., 17ᵢ₊ₙ zu übertragen, wobei der Wert VA mit einem Zeitstempel versehen oder einem der elementaren zeitgestempelten Messdaten, beispielsweise einem Indexwert eines Fluidzählers zugeordnet sein kann. Der Wert VA kann - gemäß Ausführungsbeispiel - z.B. der Zählerstand eines Wasserzählers zu einem bestimmten Zeitpunkt oder die Durchflussmenge durch den Wasserzähler seit einer vorherigen Datenübertragung (z.B. entspricht die Summe Σ der Zeitstempelungen TSᵢ der Summe Σ der Durchflussmenge; siehe Figur 4) sein.

Das Verfahren kann auch darin bestehen, mit den PAⱼ-Paketen von Zeitstempelungen TS den Wert mindestens eines anderen physikalischen oder physikalisch-chemischen Parameters PPC der Umgebung des betreffenden Sensors 1 oder des von diesem letzteren gemessenen Fluids zu einem bestimmten Zeitpunkt auszulesen und zu übertragen, wie beispielsweise die Leitfähigkeit des Fluids, die Temperatur des Fluids, den pH-Wert des Fluids, den Druck des Fluids, und/oder einen Parameter, der für die Qualität und/oder die Zusammensetzung des Fluids und/oder die Temperatur der Einbauumgebung des Sensors 1 kennzeichnend ist.

Fig. 3 zeigt beispielhaft die einzelnen Datentelegramme 17ᵢ, 17ᵢ₊₁, ...., 17ᵢ₊ₙ gemäß Fig. 2 etwas detaillierter. Die Datentelegramme 17ᵢ, 17ᵢ₊₁, ...., 17ᵢ₊ₙ umfassen jeweils zum einen eine Mehrzahl von Datenpaketen PA₁-PA₆ bzw. PA₇-PA₁₂, den absoluten oder kumulierten Wert VA, die Identität (Adresse) I des betreffenden Sensors 1 sowie den Wert mindestens eines anderen physikalischen oder physikalisch-chemischen Parameters PPC der Umgebung des betreffenden Sensors 1 oder des von letzterem zu einem bestimmten Zeitpunkt gemessenen Fluids, wie z.B. die Leitfähigkeit des Fluids, die Temperatur des Fluids, den pH-Wert des Fluids, den Druck des Fluids, einen Parameter, der für die Qualität und/oder die Zusammensetzung des Fluids und/oder die Temperatur der Einbauumgebung des Sensors 1 kennzeichnend ist.

Wie in Fig. 3 weiterhin als Beispiel dargestellt ist, kann vorgesehen sein, die Zeitstempelungen TS durch Formatierung der PAⱼ-Pakete, deren Größe einen vorgegebenen Maximalwert nicht überschreiten darf, zu verpacken, wobei jedes Mal, wenn die akkumulierten Daten die Größe eines Pakets PAⱼ erreichen, ein neues Paket bzw. Telegramm gebildet wird bzw. eine neue Übertragung ausgelöst wird, sofern das vorgegebene Zeitintervall nicht vorher abgelaufen ist.

Gemäß einer bevorzugten Variante der Erfindung werden die Zeitstempelungen TS vor deren Übertragung komprimiert. Die Komprimierung der Zeitstempelungen TS kann verlustfrei durchgeführt werden.

Alternativ kann die Komprimierung der Zeitstempelungen TS auch mit einem vorgegebenen zulässigen Verlustniveau durchgeführt werden. In der Tat kann, wenn der Benutzer oder Betreiber eine Energieeinsparung bevorzugt und eine gewisse Ungenauigkeit bei der Wiederherstellung und Wiedergabe der ursprünglichen Rohmessdaten akzeptiert (d. h. einen gewissen Verlust akzeptiert), das Komprimierungsverhältnis dann zum Nachteil einer geringeren zeitlichen Genauigkeit bei der Wiedergabe auf der Empfangsseite erhöht werden. Dieses Verlustverhältnis oder das Komprimierungsverhältnis kann als programmierbarer oder einstellbarer Parameter vorgesehen werden, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden, eine differentielle Kodierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung) anzuwenden.

Es besteht die Möglichkeit, dass die Zeitstempelungen TS in den Speichermitteln 7 des Verbrauchszählers 10 erst dann gelöscht werden, wenn die Übertragung der Zeitstempelungen TS vom Empfänger bzw. Datensammler 3 bestätigt worden ist.

Dank der Erfindung ist es möglich, am Datensammler 3 bzw. Empfangsort (z.B. Head-End 4) über Informationen zu verfügen, die eine originalgetreue und vollständige Rekonstruktion aller von den verschiedenen Sensoren 1 gelieferten Zeitstempelungen TS in sehr hoher zeitlicher Auflösung ermöglichen und eine unbegrenzte Flexibilität bei der Auswertung dieser Daten zulassen. So kann man einfach und zentral die Erweiterungsfähigkeit von "Business"-Funktionen berücksichtigen, ohne die Funktionsweise oder gar den Aufbau von Baugruppen (Sensoren, Kommunikationsmittel, und dergleichen) zu beeinflussen.

Der Aufbau des Sensors 1 kann im Vergleich zu bisher bekannten Lösungen einfacher und sein Betrieb sicherer sein. Ferner ist der Energieverbrauch der Baugruppe aus dem Sensor 1 und den Kommunikationsmitteln 2 geringer als bei den aktuellen Ausführungen, welche die Daten lokal auswerten.

Die Erfindung kann auf die Messung und Fernauslesung verschiedenster Parameter und Größen angewendet werden. Es genügt, eine elementare (vom Sensor 1 messbare) Veränderung eines Parameters oder einer Größe in Übereinstimmung mit der Auflösung des betrachteten Sensors 1 genau datieren zu können (die Zeitstempelung TS kann der Auflösung des Sensors 1 oder möglicherweise einem Vielfachen dieser Auflösung entsprechen).

Wenn sich die gemessene Größe oder der gemessene Parameter auch dekrementell ändern kann, sind die Zeitstempelungen TS mit Vorzeichen versehene elementare Maßeinheiten (positive oder negative Einheiten).

Im Zusammenhang mit einer vorteilhaften Anwendung der Erfindung, insbesondere verbunden mit dem Begriff des Verbrauchs, kann vorgesehen sein, dass die oder eine der gemessenen physikalischen Größe(n) sich auf ein Strömungsmedium bezieht, wobei jede Zeitstempelung TS einer elementaren Fluidmenge entspricht, die durch den Sensor 1, abhängig von seiner Messgenauigkeit, gemessen wird. Das gemessene Fluid kann beispielsweise Gas, Wasser, Kraftstoff oder eine chemische Substanz sein.

Alternativ oder kumulativ zu der oben genannten Ausführungsvariante kann die Erfindung auch vorsehen, dass die oder eine der gemessene(n) physikalisch-chemische(n) Größe(n) ausgewählt ist aus der Gruppe, die gebildet wird durch die Temperatur, den pH-Wert, die Leitfähigkeit und den Druck eines durch den betreffenden Sensor 1 hindurchströmenden oder von diesem kontaktierten Fluids.

Wenn alternativ oder kumulativ mindestens ein Parameter gemessen wird, kann dieser oder einer dieser gemessene(n) physikalische(n) oder physikalisch-chemische(n) Parameter kennzeichnend sein für die Qualität und/oder Zusammensetzung eines Fluids, das den betreffenden Sensor 1 durchströmt oder mit ihm in Kontakt kommt, wie z.B. Trübung, das Vorhandensein von Schadstoffen oder das Vorhandensein eines festen und/oder gasförmigen Anteils bzw. fester und/oder gasförmiger Anteile.

Die oben genannten Größen und Parameter sind selbstverständlich nur Beispiele, die nicht beschränkend sind.

Vorzugsweise werden die Daten mit Redundanz von dem jeweiligen Verbrauchszähler 10 bzw. Sensor 1 zum Datensammler 3 übertragen. Zweckmäßigerweise kann die Redundanz in der Übertragung durch wiederholtes Senden desselben Datenpakets in mehreren aufeinanderfolgenden Übertragungsvorgängen erreicht werden.

Dementsprechend werden fortlaufend Datentelegramme 17 zu einem bestimmten Zeitpunkt gebildet und sukzessive übertragen. Die einzelnen Datenpakete PA₁, ..., PAₙ bilden im Anschluss daran in ihrer Summe einen fortlaufenden zeitgestempelten Rohmessdatenstrom 13.

Fig. 4 zeigt exemplarisch ein Beispiel für eine Nachrichtenstruktur, die vom Sensor 1 bzw. z.B. dem Verbrauchszähler 10 an den Datensammler 3 bzw. an das Head-End 4 übertragen wird. Jede Zeitstempelung TS, bis TS_{N} entspricht hierbei im Rahmen des Korrelierungsmodells einer elementaren Fluidmenge, die durch den Sensor 1 gemessen wird. Das gemessene Fluid kann beispielsweise Gas, Wasser, Kraftstoff oder eine chemische Substanz sein. In dem Zeitintervall T_{E-1} bis T_{E} werden so N Impulse gemessen und die Zeitstempelungen TS₁ bis TS_{N} gespeichert, was bei einer Menge von z. B. einem Liter pro Zeitstempelung TS einer Durchflussmenge von insgesamt N Liter innerhalb dieses Zeitintervalls entspricht. Die Messwertaufbereitung bildet ein Datenpaket PAⱼ, welches N Zeitstempelungen TS₁ bis TS_{N} enthält. Aus der Mehrzahl von Datenpaketen z. B. PA, bis PA₆ bzw. PA₇ bis PA₁₂ werden gemäß Fig. 3 Datentelegramme 17ᵢ, 17ᵢ₊₁ gebildet.

Damit sich das erfindungsgemäße Verfahren an Veränderungen in der Entwicklung des Parameters oder der Messgröße anpassen kann und gleichzeitig eine zufriedenstellende Aktualisierung der verfügbaren Momentandaten gewährleistet ist, kann das Verfahren vorteilhafterweise insbesondere darin bestehen, ein neues Paket bzw. Telegramm 17 zu bilden bzw. eine neue Datenübertragung in Form einer Nachricht oder eines Telegramms durchzuführen, sobald mindestens die nachfolgende Bedingung b) erfüllt ist:
(a) Ein vorgegebenes Zeitintervall ist abgelaufen und/oder
(b) eine vorgegebene Menge an insbesondere komprimierten gesammelten Daten bzw. Zeitstempelungen TS seit der vorherigen Übertragung ist erreicht.

Die Anwendung der genannten Bedingung (b) kann beispielsweise darin bestehen, nachdem eine vorgegebene Anzahl neuer Zeitstempelungen TS erstellt wurde, regelmäßig die Größe aller neuen Zeitstempelungen TS in komprimierter oder verdichteter Form zu überprüfen. Wenn diese Größen nahe einer kritischen Größe liegen, beispielsweise nahe der Größe eines durch das Übertragungsprotokoll festgelegten Pakets, wird ein neuer Übertragungsvorgang durchgeführt (Bedingung (b) vor Bedingung (a) erfüllt), es sei denn, das vorgegebene Zeitintervall zwischen zwei aufeinanderfolgenden Übertragungen ist zuerst abgelaufen (Bedingung (a) vor Bedingung (b) erfüllt).

Gemäß der Erfindung werden z.B. im Head-End 4 die aktuellen Zeitstempelungen TS mit historischen oder empirischen Zeitstempelungen TS verglichen, um eine Betriebszustandsüberwachung des Sensors 1 durchzuführen. Hierdurch können die Funktionen des Sensors 1 und/oder das Konsumentenverhalten mit einer bisher noch nicht möglichen Auflösung überprüft werden.

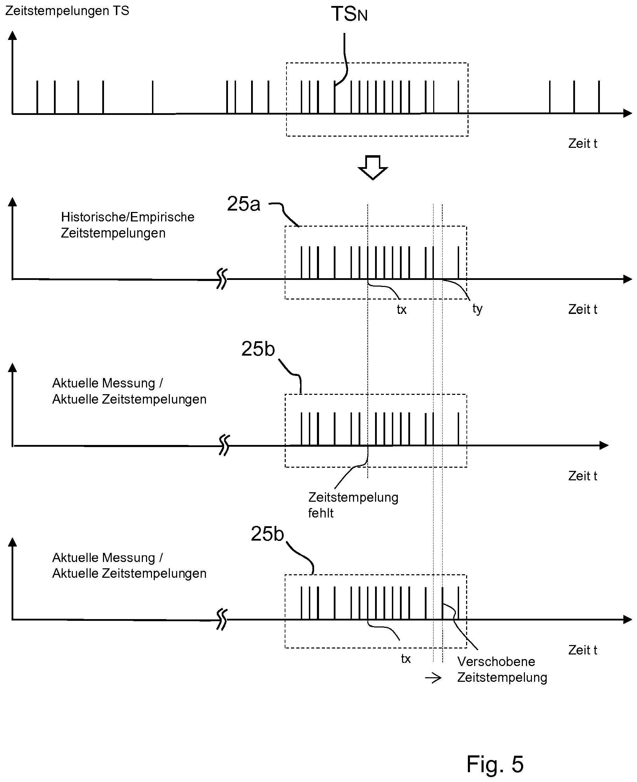

Beispielsweise wird, vgl. Fig. 5, im Rahmen des Vergleichs festgestellt, ob bestimmte Zeitstempelungen TS_{N} an der erwarteten zeitlichen Position vorhanden sind oder nicht und/oder ob bestimmte Zeitstempelungen TS_{N} in ihrer zeitlichen Position verschoben sind. Es erfolgt somit eine Auswertung der Zeitstempelungen TS in Relation zu ihrer Position an der Zeitachse t.

Das oberste Chronogramm in Fig. 5 zeigt Zeitstempelungen TS_{N} entlang der Zeitachse t über einen bestimmten zeitlichen Verlauf. Der geringste Abstand zweier benachbarter Zeitstempelungen TS stellt bei maximalem Durchfluss auch gleichzeitig die Auflösung des Messverfahrens dar (beispielsweise, wenn bei maximalem Durchfluss das Flügelrad eines Durchflusszählers einmal um 360° rotiert und fortlaufend eine Zeitstempelung TS an einer bestimmten Winkelposition ausgelöst wird).

Der Vergleich der aktuellen Zeitstempelungen TSmit historischen oder empirischen Zeitstempelungen TSkann beispielsweise auf der Grundlage eines Mustervergleichs auf Basis der sog. Pattern Recognition Technik vorgenommen werden. Stark vereinfacht ist dies in Fig. 5 dargestellt. Die Zeitstempelungen TSz. B. einer aktuellen Messung werden mit historischen oder empirischen Zeitstempelungen TSverglichen, indem jeweils die Chronogramme 25a und 25b mit einander verglichen werden. Hierbei kann auf einfache Weise festgestellt werden, ob es in Bezug auf die Zeitstempelungen TS Veränderungen gibt oder nicht. Veränderungen im Betriebszustand bedeuten gegebenenfalls Funktionsbeeinträchtigungen durch Schädigungen, Manipulationsversuche oder ein bestimmtes Konsumentenverhalten.

Bei der aktuellen Messung in dem vorletzten Messdiagramm hat der Vergleich festgestellt, dass eine Zeitstempelung TS an der betreffenden Stelle fehlt. Bei der aktuellen Messung in dem letzten Messdiagramm hat der Vergleich festgestellt, dass ein Impuls etwas später erfasst wurde, d. h. zu seiner erwarteten Lage verschoben ist.

Die oben beschriebene Feststellung des Betriebszustands erfolgt vorteilhafterweise auf Basis der Auflösung (z.B. im Millisekundenbereich oder weniger) des Messverfahrens und besitzt somit eine bisher nie gekannte Genauigkeit. Abhängig von dem vorgenommenen Vergleich kann eine Zustandsmitteilung oder ein Alarmhinweis ausgegeben werden.

Bei den Vergleichs-Zeitstempelungen TS kann es sich um historische Zeitstempelungen TS handeln, die beim Betrieb des Sensors 1 in der Betriebshistorie des Sensors 1 einmal aufgezeichnet worden sind (footprint) und für laufende Vergleiche immer wieder herangezogen werden können. Alternativ oder zusätzlich kann es sich bei den Vergleichs-Zeitstempelungen TS auch um empirische Zeitstempelungen TS, also Zeitstempelungen TS, die bestimmte Betriebszustände abbilden, handeln. So kann beispielsweise für einen Durchflusszähler z.B. einer Geschirrspülmaschine ein Zeitstempelungen-Muster für einen intakten Wassereinlauf vorgesehen sein, welches mit aktuellen Zeitstempelungen TS verglichen wird. Verändern sich die Positionen der Zeitstempelungen TS im Vergleich zu dem empirischen Zeitstempelung-Muster, kann dies beispielsweise auf einen möglicherweise erschwerten Wassereinlauf hindeuten, z. B. aufgrund eines verschmutzten Einlaufsiebes.

Die Chronogramme 25a, 25b stellen lediglich stark vereinfachte Sinnbilder für den Mustervergleich dar.

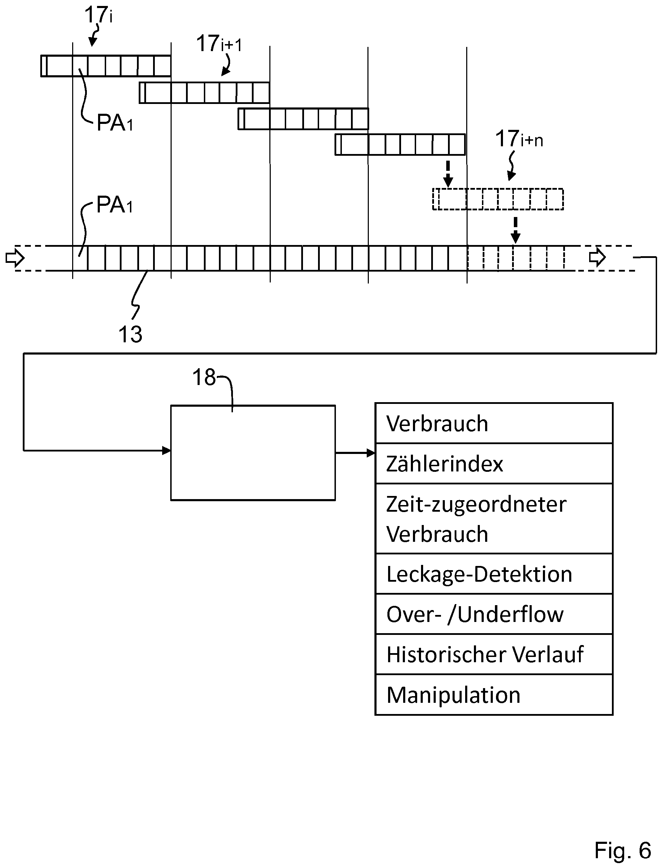

Fig. 6 zeigt die Weiterverarbeitung der einzelnen in Datentelegrammen 17ᵢ- 17ᵢ₊ₙ bereitgestellten Zeitstempelungen TS zu einer fortlaufenden zusammenhängenden Zuordnung, aus der anhand des Korrelierungsmodells ein lückenloser Rohmessdatenstrom 13 rekonstruiert werden kann. Hierbei werden die einzelnen Datentelegramme 17ᵢ - 17ᵢ₊ₙ so zusammengefügt, dass die jeweiligen Daten bzw. Datenpakete PAⱼ bzw. die darin enthaltenen Zeitstempelungen TS in Zeitrelation mit den benachbarten Datenpaketen PAⱼ gebracht werden.

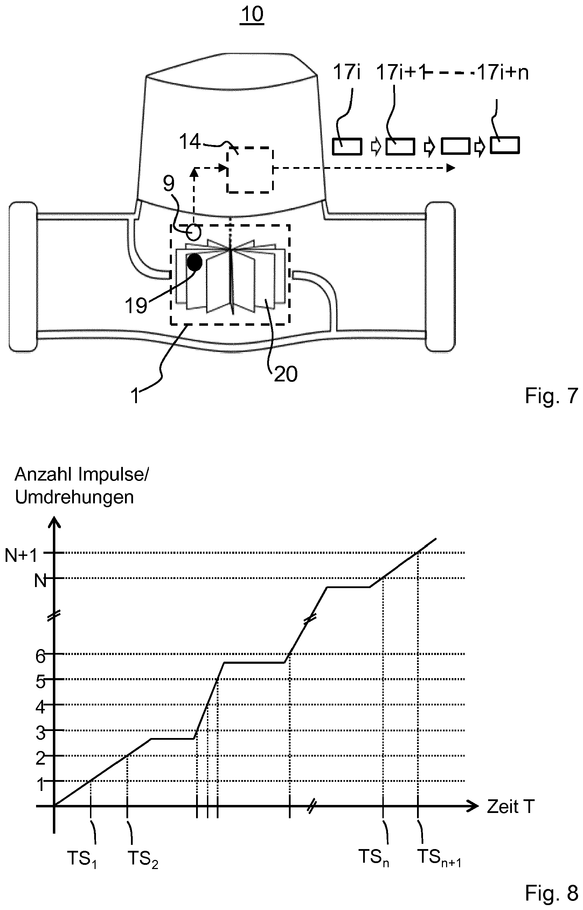

In Fig. 7 ist lediglich beispielhaft ein mechanischer Durchflusszähler 10 mit einem Sensor 1 für den Durchfluss dargestellt. Der Sensor 1 umfasst ein Flügelrad 20, ein Messelements 9 in Form z.B. eines Hallsensors sowie ein Impulsgeberelement 19, welches sich abhängig von dem Durchfluss durch den Durchflusszähler 10 hindurch mehr oder weniger dreht. Die Drehbewegung des Flügelrads 20 wird von dem Messelement 9 als Spannungswert erfasst, der von dem Impulsgeberelement 19 angeregt wird, sofern sich der betreffende Flügel des Flügelrads 20 in der Position des Messelements 9 befindet. Durch das Korrelierungsmodell ist beim Auswerten bekannt, welchem Durchflussvolumen eine Umdrehung entspricht. So kann eine Umdrehung des Flügelrades 20 z.B. einem Liter an Fluid entsprechen.

In der Messwertaufbereitung 14 ist ein Korrelierungsmodell hinterlegt, mit dem die Bedingungen für das Generieren von Zeitstempelungen TS bei bestimmten Rohmesswerten vorher festgelegt sind. Fig. 8 zeigt ein vereinfacht dargestelltes Beispiel eines solchen Korrelierungsmodells z. B. für eine fortlaufende kumulierende Durchflussmessung. Die Messeinheit ist hierbei z. B. ein vom Messelement 9 des in Fig. 7 dargestellten Sensors 1 erfasster Impuls z. B. ein Spannungsimpuls, der einer Umdrehung des Flügelrades 20 entspricht. Die vordefinierte Auflösung des Messverfahrens entspricht daher in diesem Beispiel einer Umdrehung des Flügelrads 20. Die Rohmesswerte, also die durch die Umdrehungen ausgelösten Impulse sowie die zugehörige Zeiten T, werden in den Speichermitteln 7 des Sensors 1 abgespeichert. Die Messwertaufbereitung 14 generiert für jeden Rohmesswert (d. h. für jede Umdrehung/Impuls) eine zugehörige Zeitstempelung TS₁, TS₂......bis TSₙ₊₁. Die Zeitstempelungen TS werden fortlaufend in den Speichermitteln 7 abgelegt. Dreht sich das Flügelrad 20 nicht, wird kein Impuls erzeugt und somit auch keine Zeitstempelung vorgenommen. Dreht sich das Flügelrad 20 langsamer, erfolgt der Zeitpunkt der Erfassung des Impulses entlang der Zeitachse T entsprechend später. Dementsprechend wird in diesem Fall eine spätere Zeitstempelung TS erzeugt. Wie aus Fig. 8 ersichtlich, werden somit eine Vielzahl von Zeitstempelungen TS generiert, die den über die betreffende Zeitspanne kontinuierlich gemessenen Durchfluss definieren.

Die Zeitstempelungen TS werden in Datenpaketen PAⱼ zusammengefasst und gemäß Fig. 2 als Datentelegramme 17ᵢ, 17ᵢ₊₁, 17ᵢ₊ₙ sukzessive nach Aufforderung durch den Datensammler 3 über die primäre Kommunikationsstrecke 5 an diesen übertragen. Die Datenübertragung kann hierbei vorzugsweise in komprimierter Form erfolgen. Es handelt es sich folglich um einen kontinuierlichen lückenlosen Zeitstempelungs-Datenstrom von sehr hoher Auflösung, der in Form der einzelnen fortlaufenden Datentelegramme 17ᵢ, 17ᵢ₊₁, ...., 17ᵢ₊ₙ entlang der primären Kommunikationsstrecke 5 übertragen wird.

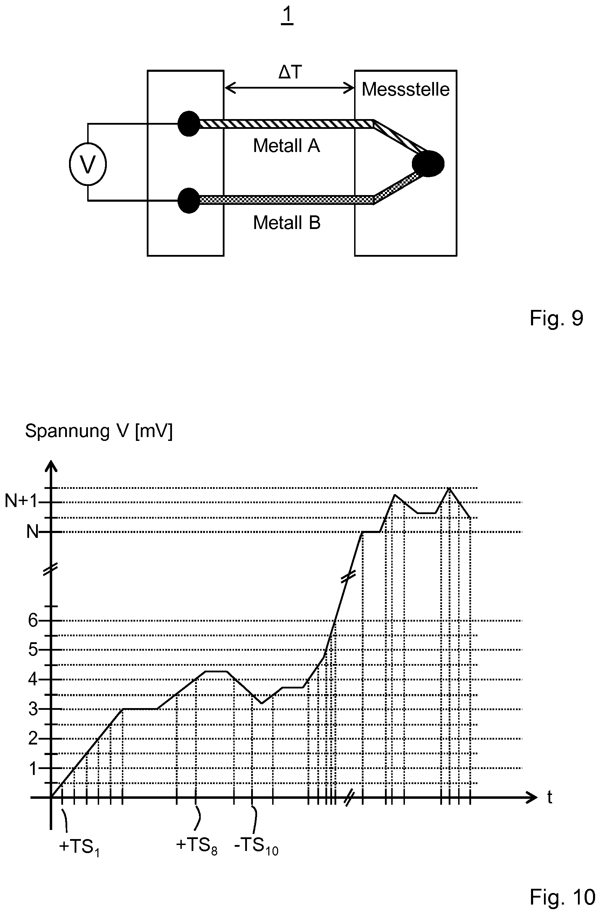

Die Sammlung von Daten ist nicht auf eine Durchflussmessung beschränkt. Fig. 9 zeigt beispielsweise einen Sensor 1 in Form eines auf Widerstandsmessung basierenden Temperaturfühlers. Der Temperaturfühler umfasst zwei im Bereich einer Messstelle miteinander verbundener Metallleiter (A, B) mit unterschiedlicher Wärmeleitfähigkeit. Im Falle eines Temperaturunterschieds ΔT zwischen der Messstelle und dem gegenüberliegenden Ende der beiden Leiter kann eine Spannung V bzw. Spannungsänderung abgegriffen werden. In diesem Fall kann als Korrelierungsmodell eine Zeitstempelung TS für eine Änderung der vom Sensor erfassten Spannung festgelegt werden.

Fig. 10 zeigt ein Beispiel für eine entsprechende Rohmessdatenkurve von Spannungswerten V zur Generierung von entsprechenden Zeitstempelungen TS bei einer Temperaturmessung. Dementsprechend wird bei jedem Anstieg oder Abfall der Spannung z. B. um 0,5 mV eine zugehörige Zeitstempelung TS generiert. Die festgelegte Auflösung des Verfahrens beträgt somit 0,5 mV. Da der Kurvenverlauf bei einer Temperaturmessung aufsteigend sowie abfallend sein kann, werden in diesem Fall die Zeitstempelungen mit einem Vorzeichen "+" für ansteigend oder "-" für abfallend versehen. Wie aus Fig. 10 deutlich wird, erhält man auch hier eine kontinuierliche Abfolge von Zeitstempelungen TS, die den gemessenen Spannungsverlauf und somit die Temperatur über den betrachteten Zeitraum sehr genau und lückenlos abbilden. Ändert sich die Temperatur d. h. die Spannung V nicht, wird keine Zeitstempelung generiert. Im Übrigen entspricht das Verfahren den in Zusammenhang mit dem eingangs beschriebenen Beispiel der Durchflussmessung dargelegten Maßnahmen.

Durch die erfindungsgemäße Sammlung von Zeitstempelungen TS, die von den Sensoren 1 bzw. Verbrauchszählern 10 des oder eines bestimmten Netzwerks geliefert werden, ermöglicht die Erfindung alle Arten von Auswertung, Analyse, Überprüfung, Überwachung sowie allgemein nützlicher oder gewünschter Verarbeitung und Verwertung, da die grundlegende einzelne Rohinformation zur Verfügung steht. Die Auswertung der bereitgestellten Zeitstempelungen TS erfolgt vorzugsweise im Bereich des Head-Ends 4 über Auswertemittel 18 und ergibt eine Vielzahl wichtiger Informationen, die für die Verwaltung des Versorgungsnetzes notwendig sind, bisher aber noch nicht generiert werden konnten, wie z.B. Verbrauch, Zählerindex, zeitzugeordneter Verbrauch, Leckage-Detektion, Over-/Underflow, historischer Verlauf und/oder Manipulation. Informationen können somit jederzeit auch retrospektive zeitlückenlos abgerufen und einer bisherigen Auswertung zugeführt werden.

Die aus den Zeitstempelungen TS rekonstruierten Rohmessdaten liegen im Head-End 4 erfindungsgemäß als Rohmessdatenstrom 13 in sehr hoher Auflösung bzw. Granularität ohne zeitliche Lücken vor. Demzufolge liegen im Gegensatz zu bisherigen Verfahren aufgrund des erfindungsgemäßen Verfahrens im Head-End 4 sehr viel mehr verwertbare Daten vor als bisher.

Der im Head-End 4 vorliegende Rohmessdatenstrom 13 besitzt vorzugsweise eine Auflösung im Sekundenbereich, Zehntelsekundenbereich, Hundertstelsekundenbereich, Tausendstelsekundenbereich oder sogar Zehntausendstelsekundenbereich.

Gegenstand der Erfindung ist auch, wie in Fig. 1 schematisch dargestellt, ein Messdaten-Informationsnetzwerks beispielsweise für ein Versorgungsnetz zur Verteilung eines insbesondere fluiden Verbrauchsguts, z.B. unter Einsatz entsprechend hergerichteter Verbrauchszähler 10, die Sensoren 1 beinhalten, die in dem Versorgungsnetz betrieben werden. Der jeweilige Verbrauchszähler 10 umfasst, vgl. Fig. 2, mindestens einen Sensor 1, welcher über ein Messelement 9 Rohmessdaten erfassen kann. Des Weiteren umfasst der jeweilige Verbrauchszähler 10 eine Messdatenaufbereitung 14, die einen Mikroprozessor 8, Speichermittel 7 sowie eine Zeitreferenzeinrichtung 15 beinhaltet. In der Messdatenaufbereitung 14 erfolgt eine Zeitstempelung TS aufgrund der Rohmessdaten, eine Komprimierung der Zeitstempelungen TS sowie eine Aufbereitung in ein Format, das zur Übertragung über eine Funkstrecke 11 bzw. über die primäre Kommunikationsstrecke 5 gemäß einem bestimmten Protokoll geeignet ist.

Der Verbrauchszähler 10 kann eine (nicht dargestellte) eigene Stromversorgung in Form einer Batterie oder dergleichen bei Bedarf umfassen. Somit kann der Verbrauchszähler 10 energieautark betrieben werden.

Im Bereich des Head-Ends 4 sind gemäß Fig. 6 Auswertemittel 18 vorgesehen, die in der Lage sind, die Zeitstempelungen TS in den einzelnen Datentelegrammen 17ᵢ - 17ᵢ₊ₙ bzw. deren Datenpakete PAⱼ zeitkontinuierlich und ohne Lücken zu einem fortlaufenden lückenlosen Rohmessdatenstrom 13 zusammenzuführen und hieraus entsprechende Dekomprimierungen, Auswertungen, Berechnungen und dergleichen vorzunehmen. Die entsprechenden Daten umfassen vorzugsweise alle in dem Messdaten-Informationsnetzwerks bzw. Versorgungsnetz befindlichen Sensoren 1 bzw. Verbrauchszähler 10.

Darüber hinaus umfasst das vorgenannte System für das betreffende oder jedes geografische Gebiet, in dem die Verbrauchszähler 10 installiert sind, einen festen Datensammler 3 (Konzentrator), der mit den Verbrauchszählern 10 des Gebietes, das ihm zugewiesen ist, eine primäre Kommunikationsstrecke 5 des Versorgungsnetzes bildet. Die primäre Kommunikationsstrecke 5 kann beispielsweise als Funkstrecke 11 ausgebildet sein. Der Datensammler 3 ist wiederum über eine tertiäre Kommunikationsstrecke 6 mit dem Head-End 4 verbunden. Die Daten können entlang der tertiären Kommunikationsstrecke 6 auf unterschiedliche Art und Weise übertragen werden, beispielsweise via LAN, GPRS, LTE, 3G, 4G usw.

Vorzugsweise bilden die Speichermittel 7 eines jeden Sensors 1 bzw. Verbrauchszählers 10 einen Pufferspeicher und sind geeignet und dazu hergerichtet, den Inhalt mehrerer PAⱼ-Pakete von Zeitstempelungen TS insbesondere im komprimierten Zustand zu speichern, wobei der Inhalt oder ein Teil des Inhalts dieses Pufferspeichers bei jeder Übertragung bzw. Abruf durch den Datensammler 3 übertragen wird.

Die von jedem Datensammler 3 gesammelten Informationen werden direkt oder indirekt an das Head-End 4 übermittelt. Dort werden auch die "Business"-Funktionen definiert und ausgeführt.

Mit dem erfindungsgemäßen Verfahren können somit beliebige Rohmessdaten abgetastet und als Auslöser für Zeitstempelungen TS verwendet werden. Bei den Zeitstempelungen TS kann es sich insbesondere um Zeitpunkte oder Zeitdifferenzen handeln. Vorzugsweise ist ein Startzeitpunkt definiert.

Vorzugsweise werden die Zeitstempelungen TS in den Speichermitteln 7 des Verbrauchszählers 10 erst dann gelöscht, wenn die Übertragung der Zeitstempelungen TS über die primäre Kommunikationsstrecke 5 vom Empfänger bzw. Datensammler 3 bestätigt worden ist.

Der Fachmann versteht selbstverständlich, dass die Erfindung auf die Messung und Fernauslesung verschiedenster Parameter und Größen angewendet werden kann: Es genügt, eine elementare (vom Sensor 1 messbare) Veränderung eines Parameters oder einer Größe in Übereinstimmung mit der Auflösung des betrachteten Sensors 1 genau datieren zu können (die zeitgestempelte elementare Variation kann der Auflösung des Sensors oder möglicherweise einem Vielfachen dieser Auflösung entsprechen).

Selbstverständlich ist die Erfindung nicht auf die in den beigefügten Zeichnungen beschriebenen und dargestellten Ausführungsformen beschränkt. Änderungen bleiben möglich, insbesondere hinsichtlich der Beschaffung der verschiedenen Elemente oder durch technische Entsprechungen, ohne dass dadurch der Schutzbereich der Erfindung verlassen wird. Vom Gegenstand der Offenbarung umfasst, sind ausdrücklich auch Kombinationen von Teilmerkmalen oder Untergruppen von Merkmalen untereinander.

### BEZUGSZEICHENLISTE

- 1: Sensor
- 2: Kommunikationsmittel
- 3: Datensammler
- 4: Head-End
- 5: primäre Kommunikationsstrecke
- 6: tertiäre Kommunikationsstrecke
- 7: Speichermittel
- 8: Mikroprozessor
- 9: Messelement
- 10: Verbrauchszähler
- 11: Funkstrecke
- 13: Rohmessdatenstrom
- 14: Messdatenaufbereitung
- 15: Zeitreferenzeinrichtung
- 16: Versorgungsleitung
- 17: Datentelegramm
- 18: Auswertemittel
- 19: Impulsgeberelement
- 20: Flügelrad
- 25a: Chronogramm
- 25b: Chronogramm
- PAⱼ: Datenpaket
- TS: Zeitstempelung

## Patentansprüche

1. Verfahren zum Sammeln von Daten in Zusammenhang mit einem Verbrauch, einem physikalischen oder physikalisch-chemischen Parameter und/oder einem Betriebszustand im Rahmen eines Betriebs eines lokalen Sensors (1), vorzugsweise eines Sensors (1) für einen Verbrauchszähler (10), als Bestandteil eines mindestens einen lokalen Sensor (1), vorzugsweise eine Mehrzahl von lokalen Sensoren (1) umfassendes Versorgungsnetzes zur Verteilung eines Verbrauchsguts, wobei
der Sensor (1) ein Messelement (9) enthält,
das Messelement (9) des jeweiligen Sensors (1) elementare Messeinheiten, die mindestens einer physikalischen oder physikalisch-chemischen Größe oder mindestens eines physikalischen oder physikalisch-chemischen Parameters entsprechen, als Rohmessdaten liefert, und
der Sensor (1) Kommunikationsmittel (2) sowie Speichermittel (7) umfasst oder mit diesen lokal verbunden ist, wobei
zur Festlegung der Messauflösung des Sensors (1) die Bedingungen für ein Generieren von Zeitstempelungen (TS) unter Anwendung eines Korrelierungsmodells vorher festgelegt werden,
auf der Basis des Korrelierungsmodells Zeitstempelungen (TS) von aufeinanderfolgenden Rohmessdaten in dem Sensor (1) generiert werden,
die Zeitstempelungen (TS) über eine drahtgebundene Verbindung und/ oder über eine Funkstrecke übertragen werden, so dass auf Basis der Zeitstempelungen (TS) unter Anwendung des Korrelierungsmodells die vom Messelement (9) erfassten Rohmessdaten rekonstruiert und ausgewertet werden, wobei
der Sensor (1) über eine primäre Kommunikationsstrecke (5) mit einem Datensammler (3) in Verbindung steht,
zwischen dem Datensammler (3) und einem Head-End (4) eine tertiäre Kommunikationsstrecke (6) vorgesehen ist, und
die von dem Sensor (1) übertragenen Zeitstempelungen (TS) im Datensammler (3) und/oder im Head-End (4) gesammelt, gespeichert und/oder ausgewertet werden,
**dadurch gekennzeichnet, dass**
eine Betriebszustandsüberwachung des Sensors (1) durchgeführt wird, indem aktuelle Zeitstempelungen (TS) mit historischen und/oder empirischen Zeitstempelungen (TS) verglichen werden, wobei
eine Mehrzahl von Zeitstempelungen (TS) entlang der primären Kommunikationsstrecke (5) jeweils als Datenpaket (17ᵢ, 17ᵢ₊ₙ) übertragen werden, wobei ein Datenpaket jeweils mehrere Zeitstempelungen (TS1-TSn) enthält, und
die Festlegung, wann eine neue Datenübertragung in Form eines Datenpakets durchzuführen ist, davon abhängt, ob eine vorgegebene Menge an insbesondere komprimierten Zeitstempelungen (TS) seit der vorherigen Übertragung erreicht worden ist.

2. Verfahren nach Anspruch 1, **dadurch gekennzeichnet, dass**
die aktuellen Zeitstempelungen (TS) sowie die historischen bzw. empirischen Zeitstempelungen (TS) jeweils als Chronogramme (25) verglichen werden, wobei die Chronogramme (25) zeitlich aufeinanderfolgende Zeitstempelungen (TS) enthalten.

3. Verfahren nach Anspruch 1 oder 2, **dadurch gekennzeichnet, dass** im Rahmen des Vergleichs festgestellt wird, ob einzelne Zeitstempelungen (TS) und/oder Gruppen von Zeitstempelungen (TS) entlang der Zeitachse t fehlen und/oder entlang der Zeitachse t verschoben sind.

4. Verfahren nach einem der vorhergehenden Ansprüche, **dadurch gekennzeichnet, dass** der Vergleich auf Basis der Messauflösung des Sensors (1) bzw. Messelements (9) oder eines ganzzahligen Vielfachen derselben stattfindet und/oder im Rahmen eines Mustervergleichs auf Basis der Pattern Recognition Technik vorgenommen wird.

5. Verfahren nach einem der vorhergehenden Ansprüche, **dadurch gekennzeichnet, dass** als Folge des Vergleichs eine Betriebszustandsmitteilung und/oder ein Warnhinweis ausgegeben wird.

6. Verfahren nach einem der vorhergehenden Ansprüche, **dadurch gekennzeichnet, dass** es sich bei dem Sensor (1) um einen Durchflusssensor handelt.

7. Verfahren nach einem der vorhergehenden Ansprüche, **dadurch gekennzeichnet, dass** im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung (TS) festgelegt wird,
bei einem Erfassen des bestimmten Werts, der bestimmten Wertänderung oder der bestimmten Wertdifferenz durch das Messelement (9) eine Zeitstempelung (TS) ausgelöst und in den Speichermitteln (7) des Sensors (1) abgespeichert wird.

8. Verfahren nach einem der vorhergehenden Ansprüche, **dadurch gekennzeichnet, dass** im Rahmen des Korrelierungsmodells ein schrittweise oder inkrementell sich erhöhender Zählerstand und/oder eine Wertetabelle mittels Zeitstempelungen (TS) abgebildet wird.

9. Verfahren nach einem der vorhergehenden Ansprüche, **dadurch gekennzeichnet, dass** die Zeitstempelungen (TS) mit einem Vorzeichen versehen sind.

10. Verfahren nach einem der vorhergehenden Ansprüche, **dadurch gekennzeichnet, dass** auf Basis der beim Datensammler (3) und/oder beim Head-End (4) ankommenden Zeitstempelungen (TS) unter Anwendung des Korrelierungsmodells ein Rohmessdatenstrom (13) generiert wird.

11. Verfahren nach einem der vorhergehenden Ansprüche, **dadurch gekennzeichnet, dass** der Rohmessdatenstrom (13) in der Weiterfolge der Datenverarbeitung abgesehen von der Messauflösung des Sensors (1) auf einer zeithistorischen Basis zeitlückenlos auswertbar ist.

12. Verfahren nach einem der vorhergehenden Ansprüche, **dadurch gekennzeichnet, dass** es sich bei den elementaren Messeinheiten um die elektrische Spannung oder um die Stromstärke handelt.

13. Verfahren nach einem der vorhergehenden Ansprüche, **dadurch gekennzeichnet, dass** die gemessene physikalische Größe sich auf ein Versorgungsmedium, vorzugsweise Wasser, Strom, Treibstoff oder Gas, eines Versorgungsnetzes bezieht und/oder der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor (1) strömt oder von diesem kontaktiert wird.

14. Verfahren nach einem der vorhergehenden Ansprüche, **dadurch gekennzeichnet, dass** die elementare Messeinheit (9) eine Zeitstempelung (TS) generiert, sobald die elementare Messeinheit (9) einen Impuls empfängt.

15. Verfahren nach einem der vorhergehenden Ansprüche, **dadurch gekennzeichnet, dass** die Festlegung, wann eine Datenübertragung vom Sensor durchzuführen ist, ferner vom Ablauf eines vorgegebenen Zeitintervalls abhängt.

16. Verfahren nach einem der vorhergehenden Ansprüche, **dadurch gekennzeichnet, dass** es umfasst, die Zeitstempelungen (TS) durch Formatierung in Datenpaketen (PAⱼ) vorbestimmter fester Größe zu verpacken, wobei jedes Mal, wenn die akkumulierten Daten die Größe eines Datenpakets (PAⱼ) erreichen oder das vorgegebene Zeitintervall abgelaufen ist, eine neue Übertragung ausgelöst wird.

17. Verfahren nach einem der vorhergehenden Ansprüche, **dadurch gekennzeichnet, dass** die Datenübertragung mit einer Redundanz durchgeführt wird, wobei die Redundanz in der Übertragung insbesondere durch wiederholtes Senden derselben Zeitstempelungen (TS) und/oder wiederholtes Senden desselben Datenpakets (PAⱼ) in mehreren aufeinanderfolgenden Übertragungsvorgängen erreicht wird.

18. Verfahren nach einem der vorhergehenden Ansprüche, **dadurch gekennzeichnet, dass** die Zeitstempelungen (TS) in komprimierter Form übertragen werden, wobei insbesondere vorgesehen ist, **dass** die Zeitstempelungen (TS) komprimiert werden und die Komprimierung der Zeitstempelungen (TS) verlustfrei durchgeführt wird oder die Komprimierung der Zeitstempelungen (TS) mit einem vorgegebenen zulässigen Verlustniveau durchgeführt wird.

19. Verfahren nach einem der vorhergehenden Ansprüche, **dadurch gekennzeichnet, dass** es sich bei dem Sensor (1) um einen Drucksensor, Temperatursensor, Feuchtesensor, Beschleunigungssensor, Höhensensor oder Bewegungssensor handelt.

20. Messdaten-Informationsnetzwerk zur Verteilung eines Verbrauchsguts mit
- mindestens einem lokalen Sensor (1) vorzugsweise einer Mehrzahl von lokal angeordneten Sensoren (1), zum Generieren und/oder Weiterleiten von Zeitstempelungen (TS) von Rohmessdaten auf der Basis des Korrelierungsmodells, vorzugsweise Rohmessdaten in Zusammenhang mit einem Verbrauch an Verbrauchsmedium, einem physikalischen oder physikalisch-chemischen Parameter,
- einem Datensammler (3) und
- einem Head-End (4), das dazu hergerichtet ist, die Messwerte von den lokalen Sendern auszuwerten,
w obei der mindestens eine lokale Sensor (1) hergerichtet ist zum Sammeln von Daten in Zusammenhang mit dem Verbrauch, dem physikalischen oder physikalisch-chemischen Parameter und/oder dem Betriebszustand im Rahmen eines Betriebes des Sensors, vorzugsweise für einen Verbrauchszähler (10), als Bestandteil eines mindestens den lokalen Sensor (1) vorzugsweise die Mehrzahl von lokalen Sensoren (1) umfassendes Versorgungsnetzes zur Verteilung eines Verbrauchsguts,
w obei der mindestens eine lokale Sensor (1) ein Messelement (9) enthält,
w obei das Messelement (9) des jeweiligen lokalen Sensors (1) dazu eingerichtet ist, elementare Messeinheiten, die mindestens einer physikalischen oder physikalisch-chemischen Größe oder mindestens einem physikalischen oder physikalisch-chemischen Parameter entsprechen, als Rohmessdaten zu liefern,
w obei der mindestens eine lokale Sensor (1) dazu eingerichtet ist,
- zur Festlegung der Messauflösung des lokalen Sensors (1) die Bedingungen für ein Generieren von Zeitstempelungen (TS) unter Anwendung eines Korrelierungsmodells vorher festzulegen,
- auf der Basis des Korrelierungsmodells Zeitstempelungen (TS) von aufeinanderfolgenden Rohmessdaten in dem Sensor (1) zu generieren,
- die Zeitstempelungen (TS) über eine drahtgebundene Verbindung und/ oder über eine Funkstrecke zu übertragen,
wobei der mindestens eine lokale Sensor (1) über eine primäre Kommunikationsstrecke (5) mit dem Datensammler (3) verbindbar ist,
wobei der Datensammler (3) über eine tertiäre Kommunikationsstrecke (6) mit dem Head-End (4) verbindbar ist,
wobei der Datensammler (3) und/oder das Head-End (4) dazu hergerichtet sind, die von dem Sensor (1) übertragenen Zeitstempelungen (TS) zu sammeln, zu speichern und/oder auszuwerten,
**dadurch gekennzeichnet, dass**
der Sensor (1) dazu eingerichtet ist, eine Mehrzahl von Zeitstempelungen (TS) entlang der primären Kommunikationsstrecke (5) jeweils als Datenpaket (17ᵢ, 17ᵢ₊ₙ) zu übertragen, wobei ein Datenpaket jeweils mehrere Zeitstempelungen (TS1-TSn) enthält und die Festlegung, wann eine neue Datenübertragung in Form eines Datenpakets erfolgen soll oder nicht, davon abhängig zu machen, ob eine vorgegebenen Menge an insbesondere komprimierten gesammelten Zeitstempelungen (TS) seit der vorherigen Datenübertragung erreicht ist, und dass das Head-End (4) dazu eingerichtet ist, den Betriebszustand des Sensors zu überwachen, indem aktuelle Zeitstempelungen (TS) mit historischen und/oder empirischen Zeitstempelungen (TS) verglichen werden.

21. Messdaten-Informationsnetzwerk nach Anspruch 20, **dadurch gekennzeichnet, dass** ein im Head-End (4) auszuwertender Rohmessdatenstrom (13) unter Zugrundelegung einer stetigen zeitlichen Auflösung kontinuierlich und/oder vollständig ist.

## Claims

1. Method for collecting data in connection with a consumption, a physical or physico-chemical parameter and/or an operating state during operation of a local sensor (1), preferably a sensor (1) for a consumption meter (10), as part of a supply network comprising at least one local sensor (1), preferably a plurality of local sensors (1), and intended to distribute a consumable, wherein
the sensor (1) contains a measurement element (9),
the measurement element (9) of the respective sensor (1) provides elementary measurement units, which correspond to at least one physical or physico-chemical variable or at least one physical or physico-chemical parameter, as raw measurement data, and
the sensor (1) comprises communication means (2) and storage means (7) or is locally connected thereto, wherein
in order to determine the measurement resolution of the sensor (1), the conditions for generating time stamps (TS) are predefined using a correlation model,
time stamps (TS) of successive raw measurement data are generated in the sensor (1) on the basis of the correlation model,
the time stamps (TS) are transmitted via a wired connection and/or via a radio path, with the result that the raw measurement data captured by the measurement element (9) are reconstructed and evaluated on the basis of the time stamps (TS) using the correlation model, wherein
the sensor (1) is connected to a data collector (3) via a primary communication path (5),
a tertiary communication path (6) is provided between the data collector (3) and a head end (4), and
the time stamps (TS) transmitted by the sensor (1) are collected, stored and/or evaluated in the data collector (3) and/or in the head end (4),
**characterized in that**
an operating state of the sensor (1) is monitored by comparing current time stamps (TS) with historical and/or empirical time stamps (TS), wherein
a plurality of time stamps (TS) are each transmitted as a data packet (17ᵢ, 17ᵢ₊ₙ) along the primary communication path (5), wherein a data packet respectively contains a plurality of time stamps (TS1-TSn), and
the stipulation of when a new data transmission should be performed in the form of a data packet depends on whether a predefined quantity of time stamps (TS), in particular compressed time stamps, has been reached since the previous transmission.

2. Method according to Claim 1, **characterized in that** the current time stamps (TS) and the historical and/or empirical time stamps (TS) are each compared as chronograms (25), wherein the chronograms (25) contain temporally successive time stamps (TS).

3. Method according to Claim 1 or 2, **characterized in that**, during the comparison, it is determined whether individual time stamps (TS) and/or groups of time stamps (TS) are missing along the time axis t and/or have been shifted along the time axis t.

4. Method according to one of the preceding claims, **characterized in that** the comparison takes place on the basis of the measurement resolution of the sensor (1) or the measurement element (9) or an integer multiple thereof and/or is performed as part of a pattern comparison on the basis of pattern recognition technology.

5. Method according to one of the preceding claims, **characterized in that** an operating state notification and/or a warning is/are output as a result of the comparison.

6. Method according to one of the preceding claims, **characterized in that** the sensor (1) is a flow sensor.

7. Method according to one of the preceding claims, **characterized in that** a specific value, a specific value change or a specific value difference of the at least one physical or physico-chemical variable or of the at least one physical or physico-chemical parameter is defined as part of the correlation model for assigning a time stamp (TS),
a time stamp (TS) is initiated and is stored in the storage means (7) of the sensor (1) if the specific value, the specific value change or the specific value difference is captured by the measurement element (9).

8. Method according to one of the preceding claims, **characterized in that** a meter reading that increases gradually or incrementally and/or a table of values is/are represented by means of time stamps (TS) as part of the correlation model.

9. Method according to one of the preceding claims, **characterized in that** the time stamps (TS) are provided with a sign.

10. Method according to one of the preceding claims, **characterized in that** a raw measurement data stream (13) is generated, on the basis of the time stamps (TS) arriving at the data collector (3) and/or at the head end (4,) using the correlation model.

11. Method according to one of the preceding claims, **characterized in that** the raw measurement data stream (13) can be evaluated on a time-historical basis without a time gap in the further course of data processing, irrespective of the measurement resolution of the sensor (1) .

12. Method according to one of the preceding claims, **characterized in that** the elementary measurement units are the electrical voltage or the current intensity.

13. Method according to one of the preceding claims, **characterized in that** the measured physical variable relates to a supply medium, preferably water, power, fuel or gas, of a supply network and/or the or one of the measured physical or chemico-physical parameter(s) is characteristic of the quantity, the quality and/or composition of a fluid which flows through the relevant sensor (1) or with which contact is made by the latter.

14. Method according to one of the preceding claims, **characterized in that** the elementary measurement unit (9) generates a time stamp (TS) as soon as the elementary measurement unit (9) receives a pulse.

15. Method according to one of the preceding claims, **characterized in that** the stipulation of when a data transmission should be performed by the sensor also depends on the expiry of a predefined interval of time.

16. Method according to one of the preceding claims, **characterized in that** it comprises packaging the time stamps (TS) into data packets (PAⱼ) of a predetermined fixed size by means of formatting, wherein a new transmission is initiated each time the accumulated data reach the size of a data packet (PAⱼ) or the predefined interval of time has expired.

17. Method according to one of the preceding claims, **characterized in that** the data transmission is carried out with a redundancy, wherein the redundancy in the transmission is achieved, in particular, by repeatedly sending the same time stamps (TS) and/or repeatedly sending the same data packet (PAⱼ) in a plurality of successive transmission processes.

18. Method according to one of the preceding claims, **characterized in that** the time stamps (TS) are transmitted in compressed form, wherein provision is made, in particular, for the time stamps (TS) to be compressed and for the time stamps (TS) to be compressed in a loss-free manner or for the time stamps (TS) to be compressed with a predefined permissible loss level.

19. Method according to one of the preceding claims, **characterized in that** the sensor (1) is a pressure sensor, a temperature sensor, a humidity sensor, an acceleration sensor, a level sensor or a motion sensor.

20. Measurement data information network for distributing a consumable, having
- at least one local sensor (1), preferably a plurality of locally arranged sensors (1), for generating and/or forwarding time stamps (TS) of raw measurement data on the basis of the correlation model, preferably raw measurement data in connection with a consumption of consumption medium, a physical or physico-chemical parameter,
- a data collector (3), and
- a head end (4) which is configured to evaluate the measured values from the local transmitters,
wherein the at least one local sensor (1) is configured to collect data in connection with the consumption, the physical or physico-chemical parameter and/or the operating state during operation of the sensor, preferably for a consumption meter (10), as part of a supply network comprising at least the local sensor (1), preferably a plurality of local sensors (1), and intended to distribute a consumable,
wherein the at least one local sensor (1) contains a measurement element (9),
wherein the measurement element (9) of the respective local sensor (1) is configured to provide elementary measurement units, which correspond to at least one physical or physico-chemical variable or at least one physical or physico-chemical parameter, as raw measurement data,
wherein the at least one local sensor (1) is configured
- to predefine the conditions for generating time stamps (TS) using a correlation model in order to determine the measurement resolution of the local sensor (1),
- to generate time stamps (TS) of successive raw measurement data in the sensor (1) on the basis of the correlation model,
- to transmit the time stamps (TS) via a wired connection and/or via a radio path,
wherein the at least one local sensor (1) can be connected to the data collector (3) via a primary communication path (5),
wherein the data collector (3) can be connected to the head end (4) via a tertiary communication path (6),
wherein the data collector (3) and/or the head end (4) is/are configured to collect, store and/or evaluate the time stamps (TS) transmitted by the sensor (1),
**characterized in that**
the sensor (1) is configured to transmit a plurality of time stamps (TS) each as a data packet (17ᵢ, 17ᵢ₊ₙ) along the primary communication path (5), wherein a data packet respectively contains a plurality of time stamps (TS1-TSn), and to make the stipulation of when a new data transmission should or should not be carried out in the form of a data packet dependent on whether a predefined quantity of collected time stamps (TS), in particular compressed time stamps, has been reached since the previous data transmission, and **in that** the head end (4) is configured to monitor the operating state of the sensor by comparing current time stamps (TS) with historical and/or empirical time stamps (TS).

21. Measurement data information network according to Claim 20, **characterized in that** a raw measurement data stream (13) to be evaluated in the head end (4) is continuous and/or complete, taking a continuous temporal resolution as a basis.

## Revendications

1. Procédé permettant de collecter des données liées à une consommation, à un paramètre physique ou physico-chimique et/ou à un état de fonctionnement dans le cadre d'un fonctionnement d'un capteur local (1), de préférence d'un capteur (1) pour un compteur de consommation (10), en tant que composant d'un réseau d'alimentation comprenant au moins un capteur local (1), de préférence une pluralité de capteurs locaux (1), pour distribuer un produit de consommation, dans lequel
le capteur (1) comporte un élément de mesure (9),
l'élément de mesure (9) du capteur respectif (1) fournit en tant que données de mesure brutes des unités de mesure élémentaires qui correspondent à au moins une grandeur physique ou physico-chimique ou à au moins un paramètre physique ou physico-chimique, et
le capteur (1) comprend des moyens de communication (2) ainsi que des moyens de stockage (7) ou est relié localement à ceux-ci, dans lequel
pour définir la résolution de mesure du capteur (1), les conditions pour la génération d'horodatages (TS) sont définies au préalable en appliquant un modèle de corrélation,
des horodatages (TS) de données de mesure brutes consécutives sont générés dans le capteur (1) sur la base du modèle de corrélation,
les horodatages (TS) sont transmis par une liaison filaire et/ou par une voie radio de sorte que sur la base des horodatages (TS), en appliquant le modèle de corrélation, les données de mesure brutes détectées par l'élément de mesure (9) sont reconstituées et évaluées, dans lequel
le capteur (1) est en communication avec un collecteur de données (3) par une voie de communication primaire (5),
une voie de communication tertiaire (6) est prévue entre le collecteur de données (3) et une tête de réseau (4), et
les horodatages (TS) transmis par le capteur (1) sont collectés, stockés et/ou évalués dans le collecteur de données (3) et/ou dans la tête de réseau (4),
**caractérisé**
**en ce qu'**une surveillance d'état de fonctionnement du capteur (1) est effectuée en ce que des horodatages (TS) actuels sont comparés avec des horodatages (TS) historiques et/ou empiriques, dans lequel
une pluralité d'horodatages (TS) est transmise sur la voie de communication primaire (5) respectivement sous forme de paquet de données (17ᵢ, 17ᵢ₊ₙ) , un paquet de données contenant respectivement plusieurs horodatages (TS1-TSn), et
la définition quand une nouvelle transmission de données sous la forme d'un paquet de données est à effectuer dépend du fait si une quantité prédéfinie d'horodatages (TS), en particulier comprimés, a été atteinte depuis la transmission précédente.

2. Procédé selon la revendication 1, **caractérisé en ce que** les horodatages (TS) actuels ainsi que les horodatages (TS) historiques ou empiriques sont respectivement comparés sous forme de chronogrammes (25), les chronogrammes (25) contenant des horodatages (TS) consécutifs dans le temps.

3. Procédé selon la revendication 1 ou 2, **caractérisé en ce que** dans le cadre de la comparaison, il est constaté si des horodatages (TS) individuels et/ou des groupes d'horodatages (TS) manquent le long de l'axe de temps t et/ou sont décalés le long de l'axe de temps t.

4. Procédé selon l'une quelconque des revendications précédentes, **caractérisé en ce que** la comparaison a lieu sur la base de la résolution de mesure du capteur (1) ou de l'élément de mesure (9) ou d'un multiple entier de celle-ci et/ou est effectuée dans le cadre d'une comparaison de formes sur la base de la technique de reconnaissance de formes.

5. Procédé selon l'une quelconque des revendications précédentes, **caractérisé en ce qu'**un message d'état de fonctionnement et/ou un avertissement est/sont émis suite à la comparaison.

6. Procédé selon l'une quelconque des revendications précédentes, **caractérisé en ce que** le capteur (1) est un capteur de débit.

7. Procédé selon l'une quelconque des revendications précédentes, **caractérisé en ce que** dans le cadre du modèle de corrélation, une valeur déterminée, un changement de valeur déterminé ou une différence de valeur déterminée de ladite au moins une grandeur physique ou physico-chimique ou du au moins un paramètre physique ou physico-chimique est défini(e) pour l'attribution d'un horodatage (TS),
l'élément de mesure (9) déclenche un horodatage (TS) et le sauvegarde dans les moyens de mémoire (7) du capteur (1) lorsque la valeur déterminée, le changement de valeur déterminé ou la différence de valeur déterminée est détecté(e).

8. Procédé selon l'une quelconque des revendications précédentes, **caractérisé en ce que** dans le cadre du modèle de corrélation, un relevé de compteur augmentant progressivement ou par incréments et/ou une table de valeurs sont reproduits au moyen des horodatages (TS).

9. Procédé selon l'une quelconque des revendications précédentes, **caractérisé en ce que** les horodatages (TS) sont signés.

10. Procédé selon l'une quelconque des revendications précédentes, **caractérisé en ce qu'**un flux de données de mesure brutes (13) est généré en appliquant le modèle de corrélation sur la base des horodatages (TS) arrivant au collecteur de données (3) et/ou à la tête de réseau (4).

11. Procédé selon l'une quelconque des revendications précédentes, **caractérisé en ce que** le flux de données de mesure brutes (13), mise à part la résolution de mesure du capteur (1), peut être évalué sans interruption dans la suite du traitement de données, sur la base d'un historique de temps.

12. Procédé selon l'une quelconque des revendications précédentes, **caractérisé en ce que** les unités de mesure élémentaires sont la tension électrique ou l'intensité de courant.

13. Procédé selon l'une quelconque des revendications précédentes, **caractérisé en ce que** la grandeur physique mesurée se réfère à un milieu d'alimentation, de préférence de l'eau, du courant, du carburant ou du gaz, d'un réseau d'alimentation et/ou **en ce que** le ou l'un des paramètres physiques ou chimio-physiques mesurés caractérisent la quantité, la qualité et/ou la composition d'un fluide qui traverse le capteur (1) en question ou entre en contact avec celui-ci.

14. Procédé selon l'une quelconque des revendications précédentes, **caractérisé en ce que** l'unité de mesure élémentaire (9) génère un horodatage (TS) dès que l'unité de mesure élémentaire (9) reçoit une impulsion.

15. Procédé selon l'une quelconque des revendications précédentes, **caractérisé en ce que** la définition quand une transmission de données est à effectuer par le capteur dépend en outre de l'écoulement d'un intervalle de temps prédéfini.

16. Procédé selon l'une quelconque des revendications précédentes, **caractérisé en ce qu'**il comprend le regroupement des horodatages (TS) par formatage dans des paquets de données (PAⱼ) d'une taille fixe prédéterminée, dans lequel une nouvelle transmission est déclenchée chaque fois que les données accumulées atteignent la taille d'un paquet de données (PAⱼ) ou l'intervalle de temps prédéfini est écoulé.

17. Procédé selon l'une quelconque des revendications précédentes, **caractérisé en ce que** la transmission de données est effectuée de manière redondante, dans lequel la redondance de la transmission est obtenue en particulier par un envoi répété des mêmes horodatages (TS) et/ou un envoi répété du même paquet de données (PAⱼ) dans plusieurs processus de transmission consécutifs.

18. Procédé selon l'une quelconque des revendications précédentes, **caractérisé en ce que** les horodatages (TS) sont transmis sous forme comprimée, dans lequel il est prévu en particulier que les horodatages (TS) soient comprimés, et que la compression des horodatages (TS) soit effectuée sans perte ou que la compression des horodatages (TS) soit effectuée avec un niveau de perte admissible prédéfini.

19. Procédé selon l'une quelconque des revendications précédentes, **caractérisé en ce que** le capteur (1) est un capteur de pression, un capteur de température, un capteur d'humidité, un capteur d'accélération, un capteur de niveau ou un capteur de mouvement.

20. Réseau d'informations de données de mesure pour distribuer un produit de consommation, comprenant
- au moins un capteur local (1), de préférence une pluralité de capteurs (1) disposés localement, pour générer et/ou retransmettre des horodatages (TS) de données de mesure brutes sur la base du modèle de corrélation, de préférence des données de mesure brutes liées à une consommation d'un milieu de consommation, à un paramètre physique ou physico-chimique,
- un collecteur de données (3), et
- une tête de réseau (4) qui est aménagée pour évaluer des valeurs mesurées des capteurs locaux,
dans lequel ledit au moins un capteur local (1) est aménagé pour collecter des données liées à la consommation, au paramètre physique ou physico-chimique et/ou à l'état de fonctionnement dans le cadre d'un fonctionnement du capteur, de préférence pour un compteur de consommation (10) en tant que composant d'un réseau d'alimentation comprenant au moins le capteur local (1), de préférence la pluralité de capteurs locaux (1), pour distribuer un produit de consommation,
dans lequel ledit au moins un capteur local (1) comporte un élément de mesure (9),
dans lequel l'élément de mesure (9) du capteur local (1) respectif est conçu pour fournir en tant que données de mesure brutes des unités de mesure élémentaires qui correspondent au moins à une grandeur physique ou physico-chimique ou au moins à un paramètre physique ou physico-chimique,
dans lequel ledit au moins un capteur local (1) est conçu pour
- définir préalablement les conditions pour la génération d'horodatages (TS) en appliquant un modèle de corrélation afin de définir la résolution de mesure du capteur local (1),
- générer des horodatages (TS) de données de mesure brutes consécutives dans le capteur (1) sur la base du modèle de corrélation,
- transmettre les horodatages (TS) par une liaison filaire et/ou par une voie radio,
dans lequel ledit au moins un capteur local (1) peut être relié au collecteur de données (3) par une voie de communication primaire (5),
dans lequel le collecteur de données (3) peut être relié à la tête de réseau (4) par une voie de communication tertiaire (6),
dans lequel le collecteur de données (3) et/ou la tête de réseau (4) sont aménagés pour collecter, stocker et/ou évaluer les horodatages (TS) transmis par le capteur (1),
**caractérisé en ce que** le capteur (1) est conçu pour transmettre une pluralité d'horodatages (TS) sur la voie de communication primaire (5) respectivement sous forme de paquet de données (17ᵢ, 17ᵢ₊ₙ) , un paquet de données contenant respectivement plusieurs horodatages (TS1-TSn), et pour rendre la définition quand une nouvelle transmission de données sous forme de paquet de données doit avoir lieu ou non dépendante du fait qu'une quantité prédéfinie d'horodatages (TS) collectés, en particulier comprimés, soit atteinte depuis la transmission de données précédente, et **en ce que** la tête de réseau (4) est conçue pour surveiller l'état de fonctionnement du capteur **en ce que** des horodatages (TS) actuels sont comparés avec des horodatages (TS) historiques et/ou empiriques.

21. Réseau d'informations de données de mesure selon la revendication 20, **caractérisé en ce qu'**un flux de données de mesure brutes (13) à évaluer dans la tête de réseau (4) est continu et/ou complet en partant d'une résolution temporelle constante.
